# EUROPEAN PATENT APPLICATION

(11) **EP 3 780 803 A1**
(43) Date of publication of application: **17.02.2021**
(21) Application number: 18914081.7
(22) Date of filing: 13.04.2018
(51) Int. Cl.: H04W 72/04, H04W 16/02, H04W 92/20

(54) **USER EQUIPMENT AND RADIO BASE STATION**

(71) Applicant: NTT DOCOMO, INC., Chiyoda-ku Tokyo 100-6150 (JP)
(72) Inventor: TAKEDA, Kazuaki, Tokyo 100-6150 (JP); TAKEDA, Kazuki, Tokyo 100-6150 (JP); WANG, Lihui, Beijing 100190 (CN)
(74) Representative: Hoffmann Eitle
(86) International application number: PCT/JP2018/015625
(87) International publication number: WO 2019/198248

(57) **Abstract**

A user terminal includes a receiving section that receives first downlink control information (DCI) transmitted from a first radio base station in a first control resource set configured within a given bandwidth and a control section that controls at least one of reception of specific data from the first radio base station and transmission of the specific data to the first radio base station based on the first DCI. Consequently, it is possible to reduce interference between a plurality of cells where different services are provided.

## Description

### Technical Field

The present invention relates to a user terminal and a radio base station in next-generation mobile communication systems.

### Background Art

In the UMTS (Universal Mobile Telecommunications System) network, the specifications of long-term evolution (LTE) have been drafted for the purpose of further increasing high speed data rates, providing lower delays, and the like (see Non-Patent Literature 1). In addition, LTE-Advanced (LTE-A, 3GPP Rel. 10-14) have been standardized for the purpose of achieving increased capacity and enhancement beyond LTE (LTE Rel. 8, 9).

LTE successor systems are also under study (also referred to as, for example, "FRA (Future Radio Access)," "5G (5th generation mobile communication system)," "5G+ (plus)," "NR (New Radio)," "NX (New radio access)," "FX (Future generation radio access)," "3GPP Rel. 15 or 16 and later releases," and the like).

The existing LTE systems (for example, Rel. 10 to 14) have introduced carrier aggregation (CA) that integrates a plurality of carriers (component carriers (CCs), cells) to achieve wider bandwidths. Each carrier is configured with the LTE Rel.8 system bandwidth as one unit. Further, in CA, a plurality of CCs of the same radio base station (eNB: eNodeB) are configured in a user terminal (UE: User Equipment).

In addition, the existing LTE systems (for example, LTE Rel. 12 to 14) have also introduce dual connectivity (DC) in which a plurality of cell groups (CGs) of different radio base stations are configured in a user terminal. Each cell group includes at least one carrier (also referred to as "CC" or "cell"). Since a plurality of carriers of different radio base stations are integrated, DC is also referred to as "inter-base station CA" (Inter-eNB CA).

### Citation List

### Non-Patent Literature

Non-Patent Literature 1:3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

Envisaging future radio communication systems (for example, 3GPP Rel.16 or later releases, 5G, 5G+, NR), studies are underway to provide a plurality of services in cells of a plurality of different radio base stations (for example, a plurality of gNBs (gNodeBs), gNB and eNB, a plurality of eNBs, and the like).

Examples of the services include high-speed and large-capacity services with different requirements (for example, services related to eMBB (enhanced Mobile Broad Band) (eMBB services)) and ultra-high reliability and low-latency services (for example, services related to URLLC (Ultra Reliable and Low Latency Communications (URLLC services)).

However, when a plurality of services are provided in cells of a plurality of different radio base stations, interference between the cells may increase.

The present invention has been made in view of the above, and it is therefore an object of the present invention to provide a user terminal and a radio base station that can reduce interference between a plurality of cells where different services are provided.

### Solution to Problem

A user terminal according to an aspect of the present invention includes a receiving section that receives first downlink control information (DCI) transmitted from a first radio base station in a first control resource set configured within a given bandwidth and a control section that controls at least one of reception of specific data from the first radio base station and transmission of the specific data to the first radio base station based on the first DCI.

### Advantageous Effects of Invention

According to the present invention, it is possible to reduce interference between a plurality of cells where different services are provided.

### Brief Description of Drawings

Figs. 1A and 1B are diagrams illustrating an example of an operation of a URLLC service.
Figs. 2A to 2C are diagrams illustrating an example of deployment scenarios of an eMBB service and the URLLC service using the same frequency.
Figs. 3A and 3B are diagrams illustrating an example of interference between a plurality of cells formed by a plurality of gNBs.
Figs. 4A and 4B are diagrams illustrating an example of semi-static resource allocation according to a first aspect.
Figs. 5A and 5B are diagrams illustrating a first example of first dynamic resource allocation according to a second aspect.
Figs. 6A and 6B are diagrams illustrating a second example of the first dynamic resource allocation according to the second aspect.
Figs. 7A and 7B are diagrams illustrating an example of second dynamic resource allocation according to the second aspect.
Fig. 8 is a diagram illustrating an example of a hybrid scheme according to a third aspect.
Fig. 9 is a diagram illustrating an example of a schematic configuration of a radio communication system according to the present embodiment.
Fig. 10 is a diagram illustrating an example of an overall configuration of a radio base station according to the present embodiment.
Fig. 11 is a diagram illustrating an example of a functional configuration of the radio base station according to the present embodiment.
Fig. 12 is a diagram illustrating an example of an overall configuration of a user terminal according to the present embodiment.
Fig. 13 is a diagram illustrating an example of a functional configuration of the user terminal according to the present embodiment.
Fig. 14 is a diagram illustrating an example of a hardware configuration of the radio base station and the user terminal according to the present embodiment.

### Description of Embodiments

Envisaging future radio communication systems (for example, 3GPP Rel. 16 or later releases, 5G, 5G+, NR), studies are underway to introduce ultra-high reliability and low-latency services (for example, services related to URLLC (Ultra Reliable and Low Latency Communications) (URLLC services)).

As a use case of the URLLC service, a communication service that requires at least one of high reliability (high accuracy) and low latency (for example, communication in plant or hospital) is assumed.

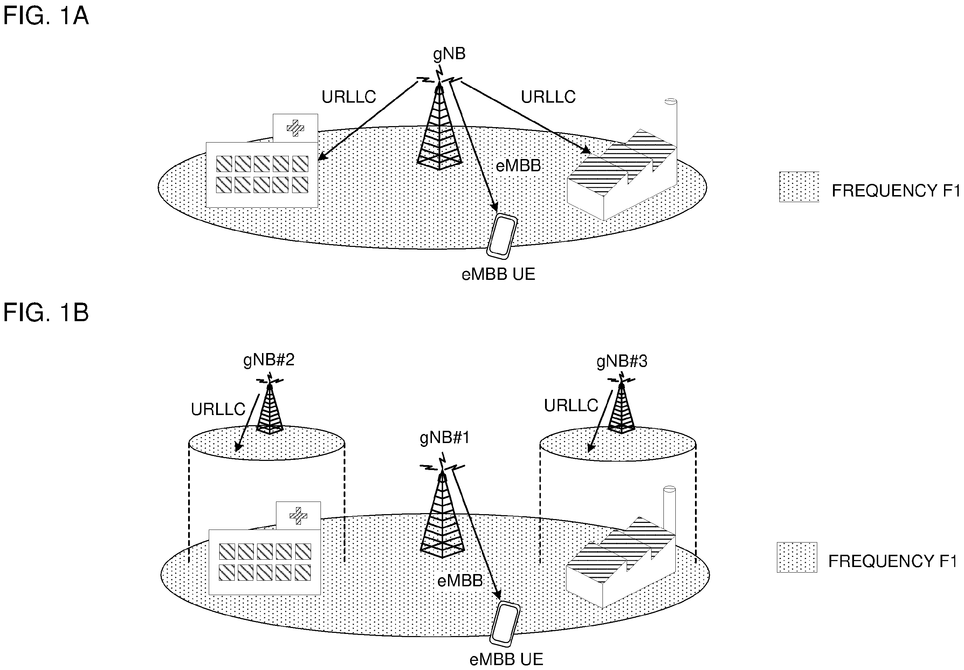

Figs. 1A and 1B are diagrams illustrating an example of an operation of the URLLC service. Fig. 1A illustrates an example in which a plurality of services with different requirements (for example, eMBB service and URLLC service) are provided by the same radio base station (for example, gNodeB (gNB)). The radio base station may be referred to as "gNB," "macro base station," "macro gNB," "eNodeB (eNB)," "macro eNB," or the like.

As illustrated in Fig. 1A, when the same gNB provides both the MBB service and the URLLC service, there is a possibility that the URLLC service, which has stricter requirements than the eMBB service, cannot be properly communicated. For example, when the gNB of Fig.1A attempts to meet error rate requirements of the URLLC service (for example, error rate of 10⁻⁵), the usable modulation scheme of the URLLC service may be limited compared to the eMBB service with lower error rate requirements (for example, error rate of 10⁻¹).

Fig. 1B illustrates an example in which the services (for example, eMBB service and URLLC service) are provided by a plurality of different radio base stations (for example, gNBs #1 to #3). The radio base station providing the eMBB service may be referred to as "gNB," "macro base station," "macro gNB," "eNB," "macro eNB," or the like. The radio base station using the URLLC service may be referred to as "local base station," "local gNB," "eNB," "local eNB," "small base station," "small gNB," "small eNB," or the like.

As illustrated in Fig. 1B, it is considered to be natural (or efficient) to provide the eMBB service and the URLLC service by separate gNBs as the operation mode of the eMBB service and the URLLC service with different requirements.

Further, as illustrated in Fig.1B, it is considered to be natural (or efficient) that the gNB #1 providing the eMBB service and the gNBs #2 and #3 providing the URLLC service use (or reuse) the same frequency (for example, F1) (also referred to as "Co-channel" or the like). This is because if the gNBs #2 and #3 use a frequency different from that of the gNB#1 (frequency dedicated to URLLC service), the frequency utilization efficiency may decrease.

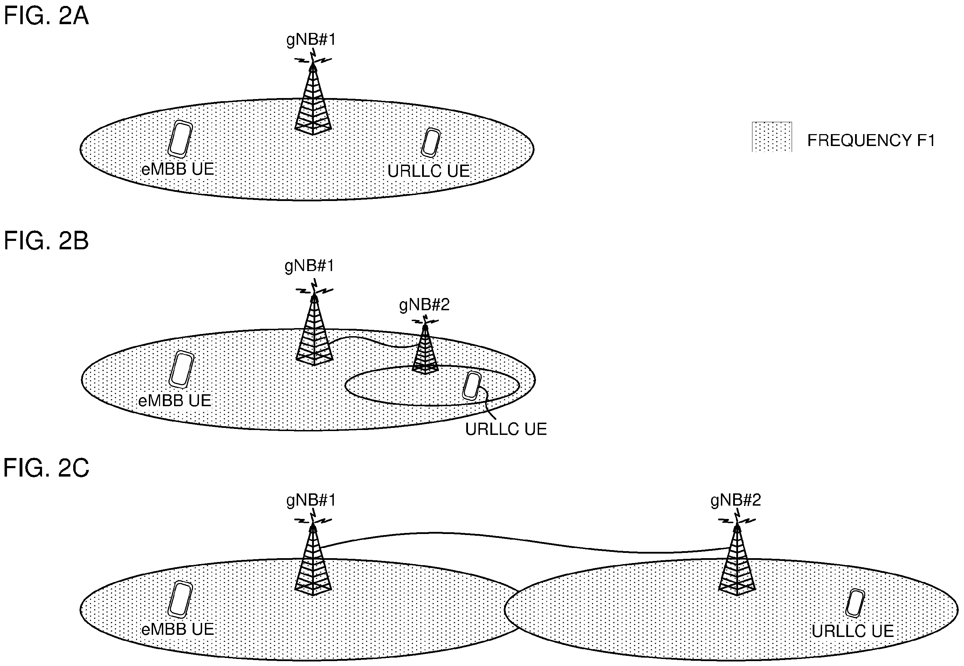

Figs. 2A to 2C are diagrams illustrating an example of deployment scenarios of the eMBB service and the URLLC service using the same frequency.

Fig. 2A illustrates an identical gNB that provides both the eMBB service and the URLLC service on the same frequency F1. For example, in Fig. 2A, a gNB #1 communicates with a user terminal using the eMBB service (for example, also referred to as "UE (user equipment)," "eMBB UE," or the like) and a user terminal using the URLLC service (for example, also referred to as "UE," "URLLC UE," or the like) on the same frequency F1.

In the scenario illustrated in Fig. 2A, the interruption of data in the URLLC UE to data in the eMBB UE may be controlled. The scenario illustrated in Fig. 2A is also assumed to be supported by 3GPP Rel.15.

Fig. 2B illustrates a plurality of gNBs that provide the eMBB service and the URLLC service separately on the same frequency F1. Fig. 2B illustrates an example in which the cell (coverage) of a gNB #2 is included in the cell of the gNB #1. Note that Fig. 2B is merely an example, and it is only required that the cell of the gNB #2 at least partially overlaps the cell of the gNB #1. In Fig. 2B, the gNB #1 communicates with the eMBB UE on the frequency F1 and the gNB #2 communicates with the URLLC UE on the frequency F1.

Fig. 2C illustrates another example of a plurality of gNBs that provide the eMBB service and the URLLC service separately on the same frequency F1. In Fig. 2C, the cell of the gNB #2 partially overlaps the cell of the gNB #1. In Fig. 2C, the gNB #1 communicates with the eMBB UE on the frequency F1 and the gNB #2 communicates with the URLLC UE on the frequency F1.

In Figs. 2B and 2C, the gNB #1 and the gNB #2 may be connected to each other by a wired link (for example, ideal backhaul such as optical fiber or non-ideal backhaul such as X2 interface) or by a wireless link (for example, OTA (Over-The-Air)). In the non-ideal backhaul, given latency is allowed and coordination does not need to be assumed.

The relative (magnitude) relationship between the cells (coverages) of gNBs is not limited to those illustrated in Figs. 2A to 2C. For example, while it is assumed in Figs. 2B and 2C that the coverage of the gNB #1 providing the eMBB service is larger than or equal to the coverage of the gNB #2 providing the URLLC service, the coverage of the gNB #1 may be smaller than the coverage of the gNB #2.

As illustrated in Figs.2B and 2C, when a plurality of gNBs, with at least some cells overlapping, provide a plurality of services (for example, eMBB service and URLLC service) on the same frequency F1, interference between the cells of the gNBs (for example, inter-cell interference between different services) may increase.

In Figs. 2B and 2C, any of the gNBs may communicate with both the eMBB UE and the URLLC UE. For example, in Fig. 2B, the gNB #1 may communicate with both the eMBB UE and the URLLC UE, or the gNB #2 may communicate with both the eMBB UE and the URLLC UE. In this case, the inter-cell interference also occurs between different services.

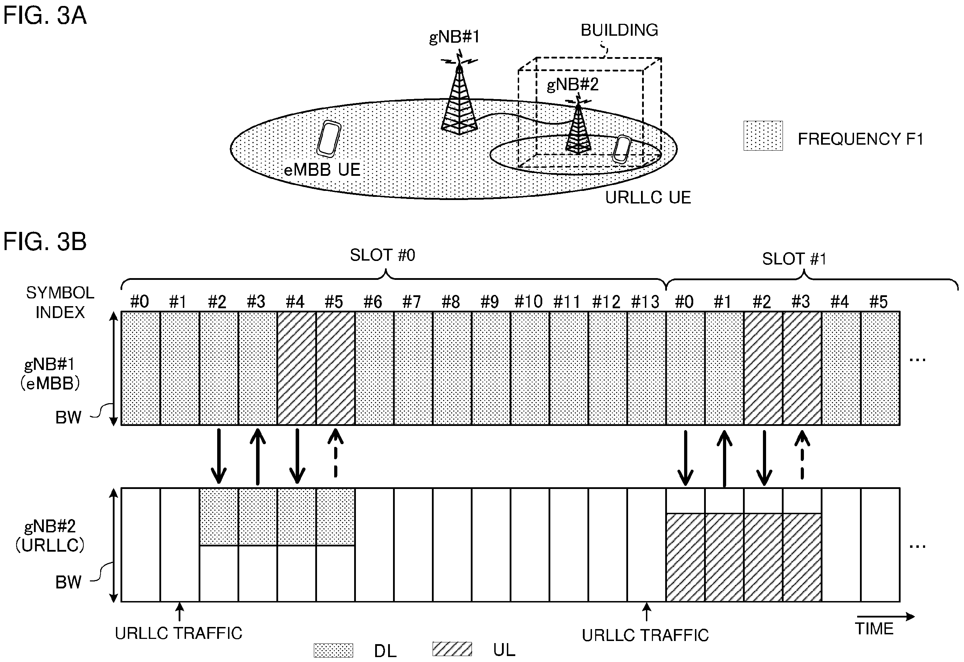

Fig. 3A illustrates a deployment scenario in which a plurality of services (for example, eMBB service and URLLC service) are provided by a plurality of different gNBs (for example, gNBs #1 and #2) on the same frequency, similarly to Fig. 2C. While the gNB #2 providing the URLLC service is in a building in Fig. 3A, the installation location of the gNB #2 does not need to be in the building.

Fig. 3B illustrates an example of interference between a plurality of cells formed by the gNBs. In Fig. 3B, a case where one slot includes 14 symbols will be described as an example. For example, in symbols #2 to #5 of a slot #0 illustrated in Fig. 3B, downlink signals (for example, data for URLLC service (URLLC data) or the like) from the gNB #2 to the URLLC UE are transmitted.

As illustrated in Fig.3B, in the symbol #2 of the slot #0, the downlink signals from the gNB #2 to the URLLC UE may be interfered with downlink signals from the gNB #1 to the eMBB UE (for example, data for eMBB service (eMBB data) or the like). In addition, in the symbol #3 of the slot #0, when the eMBB UE is located in the cell of the gNB #2, for example, the downlink signals from the gNB #1 to the eMBB UE may be interfered with the downlink signals from the gNB #2 to the URLLC UE.

In the symbol #4 of the slot #0, the downlink signals from the gNB #2 to the URLLC UE may be interfered with uplink signals from the eMBB UE within or near the cell of the gNB #2 to the gNB #1. Further, in the symbol #5 of the slot #0, when the eMBB UE is located in the cell of the gNB #2, for example, the uplink signals from the eMBB UE to the gNB #1 may be interfered with the downlink signals from the gNB #2 to the URLLC UE.

In the symbols #0 to #3 of the slot #1 illustrated in Fig. 3B, uplink signals (for example, URLLC data or the like) from the URLLC UE to the gNB #2 are transmitted.

As illustrated in Fig. 3B, in the symbol #0 of the slot #1, the uplink signals from the URLLC UE to the gNB #2 may be interfered with the downlink signals from the gNB #1 to the eMBB UE. In addition, in the symbol #1 of the slot #1, when the eMBB UE is located within or near the cell of the gNB #2, for example, the downlink signals from the gNB #1 to the eMBB UE may be interfered with the uplink signals from the URLLC UE to the gNB #2.

In the symbol #2 of the slot #1, for example, the uplink signals from the URLLC UE to the gNB #2 may be interfered with the uplink signals from the eMBB UE within or near the cell of the gNB #2 to the gNB #1. In addition, in the symbol #3 of the slot #1, when the eMBB UE is located within or near the cell of the gNB #2, for example, the uplink signals from the eMBB UE to the gNB #1 may be interfered with the uplink signals the URLLC UE to the gNB #2.

As described above, when a plurality of different services (for example, eMBB service and URLLC service) are provided in a plurality of at least partially overlapping cells on the same frequency F1, for example, it is preferable to reduce the interference between the cells.

Consequently, the present inventors have conceived of controlling at least one of semi-static allocation of resources for specific data (for example, URLLC data) and dynamic allocation of the resources for specific data (dynamic resource allocation) so as to reduce the interference between a cell where a certain service (for example, URLLC service) is provided and a cell where another service (for example, eMBB service) is provided.

Now, an embodiment of the present embodiment will be described below in detail with reference to the drawings. In the following, a case where a plurality of radio base stations that respectively provide different services are a plurality of gNBs (NR standalone) will be described as an example, but the present invention is not limited thereto. The present embodiment is also applicable to a case where at least some of the radio base stations are radio base stations with different radio access technologies (RATs) (for example, non-standalone in which eNB and gNB cooperate with each other).

Further, the carrier aggregation (CA) that integrates a plurality of cells (carriers, component carriers (CCs)) may be applied to the user terminal according to the present embodiment, or multi-connectivity (also referred to as dual connectivity (DC) or the like) that allows a user to simultaneously connect to a plurality of cell groups each of which includes one or more cells may be applied to the user terminal according to the present embodiment.

Moreover, in the following, the eMBB service and the URLLC service are exemplified as a plurality of different services, but the services are not limited thereto. While data for the URLLC service (URLLC data) is exemplified as the specific data to which at least one of the semi-static resource allocation and the dynamic resource allocation is applied, the specific data is not limited thereto.

Further, in the following, a plurality of user terminals that respectively use the services (for example, eMBB UE and URLLC UE) are described, but the present embodiment is also applicable to a case where a single user terminal uses the services.

### (First Aspect)

In a first aspect, semi-static resource allocation for specific data (for example, URLLC data) will be described. The URLLC data is data for URLLC services transmitted in at least one of a downlink shared channel (for example, PDSCH (Physical Downlink Shared Channel) and an uplink shared channel (for example, PUSCH (Physical Uplink Shared Channel)), and may include at least one of user data and control information signaled by higher layers.

In the first aspect, resources for specific data (for example, URLLC data) may be configured in (informed to) at least one type of user terminal (for example, at least one of eMBB UE and URLLC UE) by higher layer signaling.

The higher layer signaling may be, for example, any of RRC (Radio Resource Control) signaling, MAC (Medium Access Control) signaling, broadcast information, and the like, or a combination thereof. The broadcast information may be, for example, a master information block (MIB), a system information block (SIB), remaining minimum system information (RMSI), or the like.

The configured resource (also referred to as "reserved resource") by higher layer signaling may be at least one of a time resource and a frequency resource for specific data (for example, URLLC data). The time resource may be, for example, a given number of symbols, a given number of slots, a given number of sub-slots, or the like. The frequency resource may be, for example, a given number of resource blocks (physical resource blocks (PRBs)).

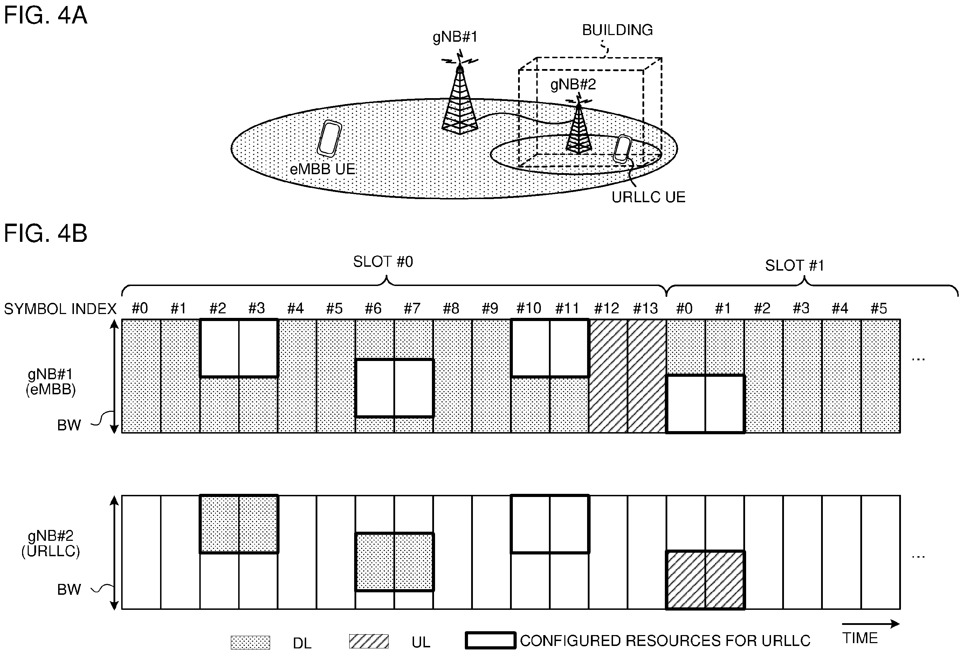

Figs. 4A and 4B are diagrams illustrating an example of semi-static resource allocation according to the first aspect. In Fig. 4A, a gNB #1 performs at least one of transmission and reception (transmission/reception) of eMBB data on the frequency F1. In addition, a gNB #2 transmits/receives URLLC data on the frequency F1. It is also assumed that the cell of the gNB #1 at least partially overlaps the cell of the gNB #2.

In the case of Fig. 4A, as illustrated in Fig. 4B, the resources for URLLC data (URLLC resources) may be semi-statically configured in a URLLC UE within a given bandwidth (BW). The given bandwidth may be the bandwidth of a carrier, or may be the bandwidth of a partial band (bandwidth part (BWP)) configured in the carrier.

For example, in Fig. 4B, the configured resource for URLLC data includes a given number of symbols (two symbols) and has a given period (four-symbol period). While the configured resource is configured in units of symbol in Fig. 4, the configured resource may be configured in units of slot or subframe. In the following, the case of configuring the configured resource in units of symbol will be described. Further, while frequency hopping is applied to the configured resource for URLLC in Fig. 4B, the frequency hopping does not need to be applied.

In Fig. 4B, the URLLC UE performs at least one of reception of the URLLC data from the gNB #2 and transmission of the URLLC data to the gNB #2 using the configured resources for URLLC data.

For example, in Fig. 4B, the URLLC UE receives downlink data (also referred to as "PDSCH") from the gNB #2 by using the configured resources of symbols #2 and #3, and #6 and #7 in a slot #0 and transmits uplink data (also referred to as "PUSCH") to the gNB #2 by using the configured resources of symbols #0 and #1 in a slot #1. The configured resources of symbols #10 and #11 in the slot #0 are not used because there is no URLLC service traffic.

On the other hand, an eMBB UE receives downlink data from the gNB #1 and transmits uplink data to the gNB #1 by using resources scheduled other than the configured resources for URLLC data. The configured resources may be informed to the eMBB UE, or does not need to be informed to the eMBB UE.

As described above, the configured resources for URLLC data are not used for the eMBB service in Fig. 4B. The gNB #1 does not need to perform scheduling of eMBB data on the configured resources for URLLC.

### Signaling Between gNBs

Information about configured resources for URLLC data (configured resource information) may be shared between the gNBs #1 and #2.

The configured resource information may include, for example, information indicating at least one of a time resource, a period, and a frequency resource of the configured resource, whether or not frequency hopping is applied, and a frequency offset when the frequency hopping is applied. Further, the configured resource information may include information about at least one of a demodulation reference signal (DMRS), a modulation scheme, and a coding rate of URLLC data transmitted using the configured resources.

For example, the gNB #1 may transmit the configured resource information to the gNB #2 as information about blank resources of the gNB #1. When URLLC traffic is generated, the gNB #2 may communicate with the URLLC UE using the configured resources indicated by the configured resource information from the gNB #1.

Alternatively, the gNB #2 may transmit the configured resource information to the gNB #1 as information about resources to be reserved by the gNB #2 (resources gNB#2 desires to use). The gNB #1 may cancel scheduling of eMBB data for the configured resources indicated by the configured resource information from the gNB #2.

Signaling between the gNB #1 and gNB #2 may be performed over a wired link (for example, ideal backhaul such as optical fiber, or a non-ideal backhaul such as X2 interface), or over a wireless link (for example, OTA).

### Signaling to URLLC UE

The URLLC UE may receive the configured resource information described above. For example, the URLLC UE may receive the configured resource information by higher layer signaling (for example, at least one of RRC signaling, MAC signaling, and broadcast information).

Further, the URLLC UE may receive the configured resource information from the gNB #2 forming a cell for the URLLC service (URLLC data). The cell for the URLLC service may be referred to as "local cell," "primary secondary cell (PS Cell)," "primary cell (PCell)," "serving cell," or the like.

Alternatively, the URLLC UE may receive the configured resource information from the gNB #1 forming a cell for the eMBB service (eMBB data). The cell for the eMBB service may be referred to as "macro cell," "PCell," "serving cell," or the like.

The URLLC UE may control the transmission/reception of the URLLC data using configured resources based on the configured resource information.

### Signaling to eMBB UE

The eMBB UE does not need to receive information about blank resources of the gNB #1 (for example, configured resource information described above) (first example), or may receive the information (second example).

### <<First Example>>

In a first example, the eMBB UE does not need to receive information about blank resources of the gNB #1 (for example, configured resource information described above).

The gNB #1 does not use configured resources for URLLC in the cell of the gNB #1 (determine as blank resources). The gNB #1 may schedule downlink data (for example, PDSCH) to the eMBB UE and uplink data (for example, PUSCH) from the eMBB UE in resources other than blank resources within a given bandwidth.

In addition, the gNB #1 may transmit the information about the blank resources of the gNB #1 (for example, configured resource information described above) to the gNB #2. The gNB #2 may transmit downlink data (for example, PDSCH) to the URLLC UE using the configured resources (blank resources of gNB #1) in the cell of the gNB #2. The gNB #2 may also receive uplink data (for example, PUSCH) from the URLLC UE.

In the first example, eMBB data is scheduled while the blank resources of the gNB #1 are excluded. For this reason, it is possible to reduce the load due to processes related to transmission/reception in the eMBB UE (for example, at least one of rate matching and puncturing of eMBB data in blank resources).

### <<Second Example>>

In a second example, the eMBB UE may receive information about blank resources of the gNB #1 (for example, configured resource information described above). For example, the eMBB UE may receive the information about blank resources by at least one of higher layer signaling and L1 signaling.

As described above, higher layer signaling is, for example, at least one of RRC signaling, MAC signaling, and broadcast information. L1 signaling is, for example, downlink control information (DCI), and is also referred to as "physical layer signaling" or the like.

The eMBB UE may perform rate matching of blank resources (configured resources for URLLC described above) indicated by the information about blank resources in the resources allocated (scheduled) to the transmission/reception of eMBB data.

Alternatively, the eMBB UE may puncture the blank resources (configured resources for URLLC described above) indicated by the information about blank resources in the resources allocated to the transmission/reception of the eMBB data.

Alternatively, when the resources allocated to the transmission/reception of the eMBB data overlap at least partially the blank resources (configured resource for URLLC described above) indicated by the information about blank resources, the eMBB UE may cancel the transmission/reception of the eMBB data.

In the second example, the eMBB UE appropriately controls processes related to the transmission/reception of the eMBB data (for example, at least one of rate matching, puncturing, and cancellation) based on the information about the blank resources of the gNB #1. It is thus possible to reduce the load of scheduling the eMBB data in the gNB #1.

As described above, in the first aspect, resources for specific data (e.g., URLLC data) are semi-statically configured, and the configured resources become blank resources in a cell where another data (for example, eMBB data) is transmitted/received. Consequently, even when the same frequency is used in both a cell where specific data is transmitted/received and a cell where another data is transmitted/received, the interference between the cells can be reduced.

### (Second Aspect)

In a second aspect, dynamic resource allocation for specific data (for example, URLLC data) will be described. In the second aspect, a gNB that transmits/receives data other than the specific data (for example, eMBB data) may dynamically allocate resources for the specific data (for example, URLLC resources) (first dynamic resource allocation). Alternatively, a gNB that transmits/receives the specific data (for example, URLLC data) may dynamically allocate the resources for the specific data (for example, URLLC resources) (second dynamic resource allocation). The second aspect will describe mainly differences from the first aspect.

### <First Dynamic Resource Allocation>

In first dynamic resource allocation, a gNB that transmits/receives eMBB data may transmit DCI indicating URLLC resources.

In the first dynamic resource allocation, a plurality of control resource sets (CORESETs) may be configured within a given bandwidth (for example, BWP). The CORESET is a resource area to which a downlink control channel (for example, PDCCH (physical downlink control channel)) is allocated, and may be configured to include given frequency domain resources and time domain resources (for example, 1 or 2 OFDM symbols). The PDCCH (or DCI) is mapped to a given resource unit in the CORESET.

In the first dynamic resource allocation, a plurality of pieces of DCI for different purposes may be transmitted from different gNBs in a plurality of CORESETs (or plurality of search spaces of respective CORESETs). For example, one piece of DCI may indicate URLLC resources, and another DCI may grant transmission/reception of URLLC data. Further, the pieces of DCI may be transmitted in different DCI formats.

Moreover, cyclic redundancy check (CRC) bits scrambled (masked) with different identifiers (RNTIs (radio network temporary identifiers)) may be added to the pieces of DCI. For example, the CRC bits of the DCI indicating the URLLC resources may be scrambled with an identifier common to one or more user terminals, and the bits of the DCI granting the URLLC data may be scrambled with an identifier unique to each user terminal.

The pieces of DCI may be monitored by a user terminal (for example, URLLC UE) (first example), or some pieces of DCI may be monitored by a gNB that transmits/receives specific data (for example, URLLC data) (second example).

### <<First Example>>

In a first example, a user terminal (for example, URLLC UE) may monitor a plurality of CORESETs (or plurality of search spaces included in respective CORESETs) configured within a given bandwidth (for example, BWP) and detect a plurality of pieces of DCI.

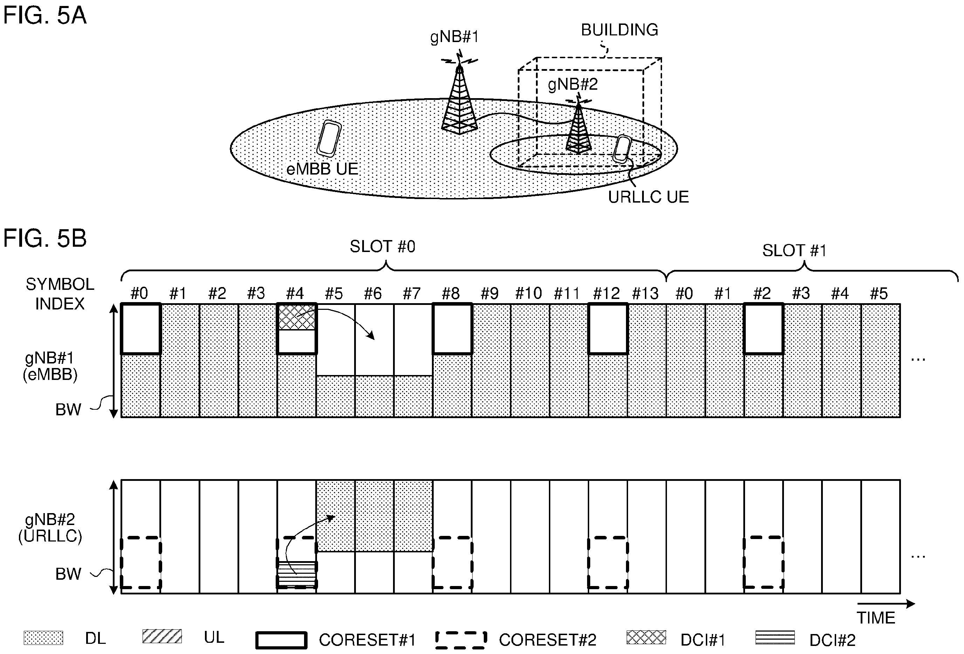

Figs. 5A and 5B are diagrams illustrating the first example of the first dynamic resource allocation according to the second aspect. In Figs. 5A and 5B, description of the same contents as those of Figs. 4A and 4B will be omitted, and differences from Figs. 4A and 4B will be mainly described.

In the case illustrated in Fig. 5A, as illustrated in Fig. 5B, a plurality of CORESETs (CORESET #1 and CORESET #2) may be configured within a given bandwidth (BW). As illustrated in Fig. 5B, the CORESETs may be placed in the same symbol with a given period (for example, four-symbol period). Alternatively, the CORESETs may be placed in different frequency resources within the given bandwidth.

In Fig. 5B, a URLLC UE monitors (blind-decodes) the CORESETs #1 and #2 (or plurality of search spaces configured in CORESETs #1 and #2, respectively). An eMBB UE may monitor the CORESET #1 (or search space configured in CORESET #1).

In Fig. 5B, the URLLC UE detects DCI #1 indicating URLLC resources in the CORESET #1. The DCI #1 may be transmitted from a gNB #1. Further, in Fig. 5B, the URLLC UE detects DCI #2 that grants (schedules) URLLC data in the CORESET #2. The DCI #2 may be transmitted from a gNB #2.

The DCI #1 detected by the CORESET #1 may include information about URLLC resources (URLLC resource information). The URLLC resource information may include, for example, information indicating at least one of a time resource and a frequency resource available for the URLLC data.

On the other hand, the DCI #2 detected by the CORESET #2 may include information (URLLC data information) about URLLC data transmitted/received using the URLLC resources indicated by the DCI #1. The URLLC data information may include, for example, information indicating at least one of a modulation scheme of the URLLC data, a coding rate of the URLLC data, a quasi-co-location (QCL) relationship between a demodulation reference signal (DMRS) and another signal (for example, synchronization signal block (SSB, also referred to as "SS/PBCH block") or a channel state information reference signal (CSI-RS)) (state of transmission configuration indication (TCI) (TCI state)).

The gNB #1 may determine the URLLC resources indicated by the DCI #1 as blank resources and schedule eMBB data in resources other than the URLLC resources. The gNB #2 may transmit/receive the URLLC data using the URLLC resources indicated by the DCI #1.

### Signaling Between gNBs

Information about URLLC resources may be shared between the gNBs #1 and #2. For example, the gNB #1 may transmit information (candidate set information) indicating a set (candidate set) of one or more candidates for the URLLC resources to the gNB #2.

The DCI #1 transmitted from the gNB #1 in the CORESET # 1 may indicate a single URLLC resource in the candidate set. The URLLC UE may control reception/transmission of the URLLC data using the URLLC resource indicated by the DCI #1 based on the DCI #2 detected in the COERSET #2.

### Signaling to URLLC UE

The URLLC UE may receive configuration information (CORESET configuration information) about a plurality of CORESETs #1 and #2 configured within a given bandwidth. For example, the URLLC UE may receive the CORESET configuration information by higher layer signaling (for example, at least one of RRC signaling, MAC signaling, and broadcast information).

The CORESET configuration information may include information indicating at least one of each CORESET identifier within the given bandwidth, a time resource (period), a frequency resource, a period, a mapping type of a control channel element (CCE, Control Resource Set) and a resource element group (REG), and a QCL relationship between DMRS of PDCCH transmitted in each CORESET and another signal (SSB or CSI-RS) (TCI state).

Further, the URLLC UE may receive the CORESET configuration information from either the gNB #2 or the gNB #1. The URLLC UE may configure the CORESETs #1 and #2 based on the CORESET configuration information, and control monitoring (blind decoding) of the DCI #1 and the DCI #2 in the CORESETs #1 and #2, respectively.

### Signaling to eMBB UE

The eMBB UE does not need to receive information about blank resources of the gNB #1 (for example, URLLC resource information described above), or may receive the information. In the latter case, the eMBB UE may receive the information about blank resources by at least one of higher layer signaling and L1 signaling.

For example, the eMBB UE may monitor the CORESET #1 (or search space configured in CORESET #1) and detect the DCI #1 including the URLLC resource information described above. The eMBB UE may determine the URLLC resources indicated by the DCI #1 as a blank resources, and control processes related to transmission/reception of eMBB data scheduled by DCI (not illustrated) (for example, at least one of rate matching and puncturing in blank resources).

Alternatively, when the resources allocated to the transmission/reception of the eMBB data overlap at least partially the URLLC resources indicated by the DCI #1, the eNBB UE may cancel the transmission/reception of the eMBB data.

Further, the eNBB UE may receive information (candidate set information) indicating a set (candidate set) of one or more candidates for URLLC resources (that is, blank resources of eMBB data) by higher layer signaling. The DCI #1 may indicate a single URLLC resource in the candidate set.

In the first example, the URLLC UE monitors the CORESETs #1 and #2 within a given bandwidth, and thus the DCI #1 indicating the URLLC resource and the DCI #2 that grants the URLLC data may be placed in CORESETs with the same symbol.

### <<Second Example>>

In a second example, a gNB that transmits/receives URLLC data may monitor some of a plurality of CORESETs configured within a given bandwidth (for example, BWP) (or some of a plurality of search spaces included in respective CORESETs), and detect DCI indicating URLLC resources determined by a gNB that transmits/receives eMBB data.

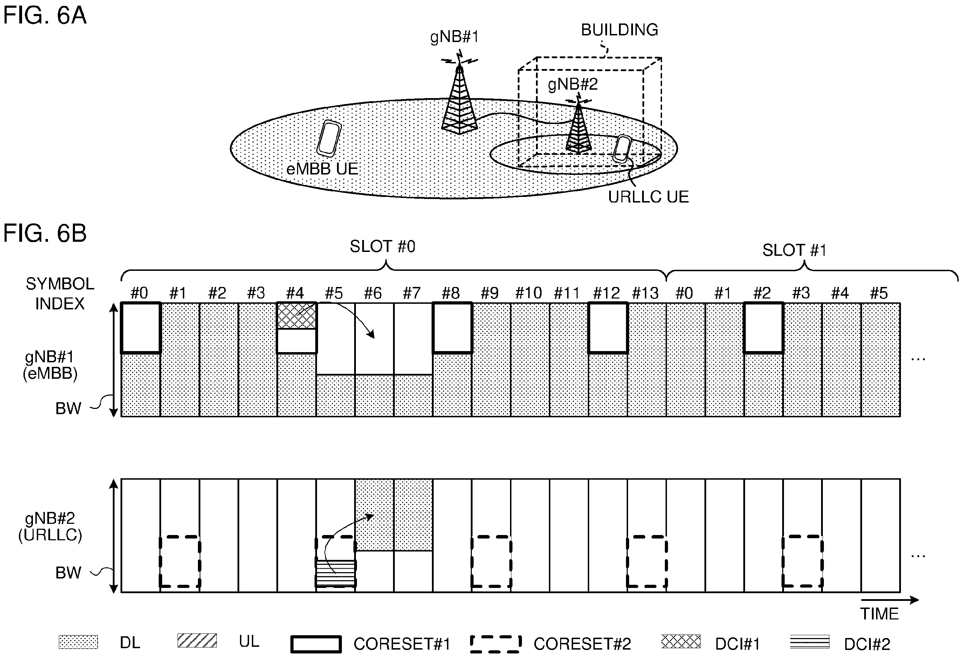

Figs. 6A and 6B are diagrams illustrating the second example of the first dynamic resource allocation according to the second aspect. In Figs. 6A and 6B, description of the same contents as those of Figs. 4A and 4B, and Figs. 5A and 5B will be omitted, and differences from Figs. 4A and 4B, and Figs. 5A and 5B will be mainly described.

In the case illustrated in Fig. 6A, as illustrated in Fig. 6B, a plurality of CORESETs (CORESETs # 1 and #2) may be configured within a given bandwidth (BW). As illustrated in Fig. 6B, the CORESETs may be placed in different symbols with a given period (for example, four-symbol period). The periods of the CORESETs may be the same or different from each other.

In Fig. 6B, a gNB #2 that transmits/receives URLLC data monitors (blind-decodes) the CORESET #1 (or search space configured in CORESET #1). Meanwhile, a URLLC UE monitors (blind-decodes) the CORESET #2 (or search space configured in CORESET #2). An eMBB UE may monitor the CORESET #1 (or search space configured in CORESET #1).

In Fig. 6B, the gNB #2 detects DCI #1 indicating URLLC resources in the CORESET #1. The DCI #1 may be transmitted from a gNB #1. When URLLC traffic is present, the gNB #2 transmits DCI #2 that grants (schedules) URLLC data in at least some of the URLLC resources indicated by the DCI #1.

The URLLC UE detects the DCI #2 that grants (schedules) URLLC data in the CORESET #2. The URLLC UE may control the transmission/reception of the URLLC data based on the DCI #2.

The DCI #1 and DCI #2 detected in the CORESET #1 may each include at least one piece of information described in the first example. Further, in the second example, the DCI #2 may include information indicating at least one of a time resource and a frequency resource to which the URLLC data is allocated among the URLLC resources indicated by the DCI #1.

The gNB #1 may determine the URLLC resources indicated by the DCI #1 as blank resources and schedule eMBB data in resources other than the URLLC resources. The gNB #2 may transmit/receive the URLLC data using at least some of the URLLC resources indicated by the DCI #1.

### Signaling Between gNBs

Information about URLLC resources may be shared between the gNBs #1 and #2. For example, the gNB #1 may transmit information (candidate set information) indicating a set (candidate set) of one or more candidates for the URLLC resources to the gNB #2.

The DCI #1 transmitted from the gNB #1 in the CORESET # 1 may indicate a single URLLC resource in the candidate set. The gNB #2 may select the URLLC resource indicated by the DCI #1 detected in the CORESET #1 from the candidate set signaled in advance from the gNB #1.

The gNB #2 may also receive configuration information about the CORESET #1 from the gNB #1. The configuration information may include at least one piece of the information described in the CORESET configuration information of the first example.

### Signaling to URLLC UE

The URLLC UE may receive configuration information (CORESET configuration information) about at least one of the CORESETs #1 and #2. For example, the URLLC UE may receive the configuration information by higher layer signaling (for example, at least one of RRC signaling, MAC signaling, and broadcast information). The configuration information may include at least one piece of the information described in the CORESET configuration information of the first example.

Further, the URLLC UE may receive the CORESET configuration information from either the gNB #1 or the gNB #2. The URLLC UE may configure the CORESET #2 based on the CORESET configuration information, and control monitoring (blind decoding) of the DCI #2 in the CORESET #2.

The URLLC UE may configure the CORESET #1 based on the CORESET configuration information, and control monitoring of the DCI #1 in the CORESET #1. In an uplink (UL), the URLLC UE may monitor not the CORESET #2 but the CORESET #1. A user terminal may determine URLLC resources available for transmitting URLLC data on the UL based on the DCI #1 detected in the CORESET #1.

### Signaling to eMBB UE

The eMBB UE does not need to receive information about blank resources of the gNB #1 (for example, URLLC resource information in DCI #1 described above), or may receive the information. In the latter case, the eMBB UE may receive the information about blank resources by at least one of higher layer signaling and L1 signaling.

For example, the eMBB UE may monitor the CORESET #1 (or search space configured in CORESET #1) and detect the DCI #1. The eMBB UE may determine the URLLC resources indicated by the DCI #1 as a blank resources, and control processes related to transmission/reception of eMBB data scheduled by DCI (not illustrated) (for example, at least one of rate matching and puncturing in blank resources).

Alternatively, when the resources allocated to the transmission/reception of the eMBB data overlap at least partially the URLLC resources indicated by the DCI #1, the eNBB UE may cancel the transmission/reception of the eMBB data.

Further, the eNBB UE may receive information (candidate set information) indicating a set (candidate set) of one or more candidates for URLLC resources (that is, blank resources of eMBB data) by higher layer signaling. The DCI #1 may indicate a single URLLC resource in the candidate set.

In the second example, the gNB #2 transmits the DCI #2 that grants URLLC data based on the DCI #1 detected in the CORESET #1 within a given bandwidth. Consequently, the DCI #1 and the DCI #2 may be placed in CORESETs with different symbols.

As described above, in the first dynamic resource allocation, URLLC resources are dynamically allocated by DCI transmitted from the gNB #1 that transmits/receives eMBB data. Further, the gNB #1 determines the URLLC resources as blank resources. As a result, in the first dynamic resource allocation, even when different gNBs #1 and #2 transmit/receive URLLCC data and eMBB data using the same frequency, the interference between a plurality of cells formed by the gNBs #1 and #2 can be reduced.

### <Second Dynamic Resource Allocation>

As described above, the DCI indicating URLLC resources (that is, blank resources of eMBB data) is transmitted from the gNB that transmits/receives the eMBB data in the first dynamic resource allocation. On the other hand, second dynamic resource allocation is different from the first dynamic resource allocation in that the DCI indicating URLLC resources scheduled in URLLC data is transmitted from a gNB that transmits/receives the URLLC data. Hereinafter, differences from the first dynamic resource allocation will be mainly described.

In the second dynamic resource allocation, one or more CORESETs may be configured within a given bandwidth (for example, BWP). In the second dynamic resource allocation, a CORESET in which DCI for eMBB data is placed and a CORESET in which DCI for URLLC data is placed may be the same or may be different from each other.

In the second dynamic resource allocation, the gNB #1 that transmits/receives the eMBB data may monitor a CORESET for the URLLC data and detect the DCI indicating URLLC resources scheduled in the URLLC data.

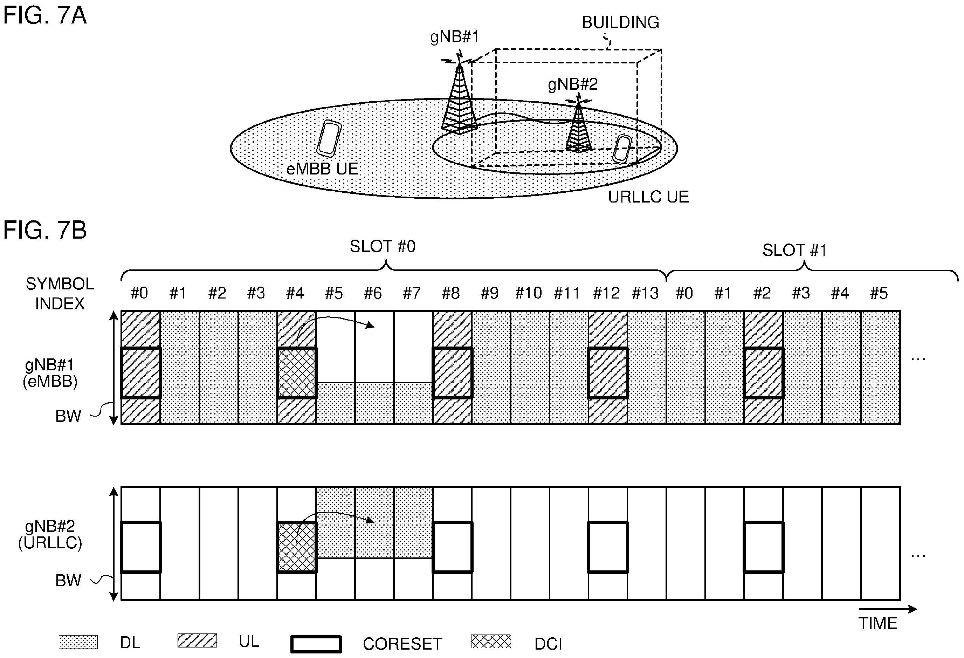

Figs. 7A and 7B are diagrams illustrating an example of the second dynamic resource allocation according to the second aspect. In Figs. 7A and 7B, description of the same contents as those of Figs.4A and 4B, 5A and 5B, and 6A and 6B will be omitted, and differences from Figs. 4A and 4B, 5A and 5B, and 6A and 6B will be mainly described.

In the case illustrated in Fig. 7A, as illustrated in Fig. 7B, a CORESET for DCI for scheduling URLLC data may be configured within a given bandwidth (BW). The CORESET may be shared with DCI (not illustrated) for scheduling eMBB data, or may be dedicated to DCI transmitted from the gNB #2. As illustrated in Fig. 7B, the CORESET may have a given period (for example, four-symbol period).

In Fig. 7B, a URLLC UE monitors (blind-decodes) a CORESET in which DCI for scheduling the URLLC data is placed (or search space configured in CORESET). The URLLC UE controls the transmission/reception of the URLLC data using URLLC resources indicated by the DCI.

In Fig. 7B, a gNB #1 that transmits/receives eMBB data monitors (blind-decodes) the CORESET in which the DCI for scheduling the URLLC data is placed (or search space configured in CORESET).

For example, as illustrated in Fig. 7B, the CORESET may be configured in a UL slot. The gNB #1 may monitor (blind-decodes) control information (DCI) placed in the CORESET in the UL slot.

When detecting the DCI, the gNB #1 may determine URLLC resources indicated by the DCI as blank resources. The gNB #1 may transmit the DCI for scheduling the eMBB data to a resource other than the blank resource.

In Fig. 7B, an eMBB UE may monitor the CORESET. The eMBB UE may determine the URLLC resources indicated by the DCI as blank resources, and control processes related to transmission/reception of eMBB data scheduled by DCI (not illustrated) (for example, at least one of rate matching and puncturing in blank resources).

Alternatively, when the resources allocated to the transmission/reception of the eMBB data overlap at least partially the URLLC resources indicated by the DCI, the eNBB UE may cancel the transmission/reception of the eMBB data.

The DCI detected in the CORESET may include information about URLLC resources (URLLC resource information). The URLLC resource information may include, for example, information indicating at least one of a time resource and a frequency resource available for the URLLC data. The DCI may include information (URLLC data information) about URLLC data transmitted/received using URLLC resources. The URLLC data information includes, for example, information indicating at least one of a modulation scheme of the URLLC data, a coding rate of the URLLC data, and a QCL relationship between DMRS and another signal (for example, SSB or CSI-RS) (TCI state).

### Signaling Between gNBs

Information about URLLC resources may be shared between the gNBs #1 and #2. For example, the gNB #1 (or gNB #2) may transmit information (candidate set information) indicating a set (candidate set) of one or more candidates for the URLLC resource to the gNB #2 (or gNB #1).

The DCI transmitted from the gNB #2 in the CORESET illustrated in Fig. 7B may indicate a single URLLC resource in the candidate set. The gNB #1 may select the URLLC resource indicated by DCI detected in the CORESET from the candidate set signaled in advance.

The gNB #1 may also receive configuration information about the CORESET from the gNB #2. The configuration information may include at least one piece of the information described in the CORESET configuration information in the first example of the first dynamic resource allocation.

### Signaling to URLLC UE

The URLLC UE may receive configuration information (CORESET configuration information) about the CORESET. For example, the URLLC UE may receive the configuration information by higher layer signaling (for example, at least one of RRC signaling, MAC signaling, and broadcast information). The configuration information may include at least one piece of the information described in the CORESET configuration information in the first example of the first dynamic resource allocation.

Further, the URLLC UE may receive the CORESET configuration information from either the gNB #1 or the gNB #2. The URLLC UE may configure the CORESET based on the CORESET configuration information, and control monitoring (blind decoding) of DCI for scheduling URLLC data in the CORESET.

Alternatively, the gNB #2 may monitor a CORESET (not illustrated) placed in a DL slot of the gNB #1, and detect DCI (for example, DCI format 2_0) including a slot format indicator (SFI) transmitted from gNB #1. The SFI may indicate a communication direction of each symbol in a slot (which may be U: UL, D: DL, X: UL or DL).

The gNB #2 may detect DCI including the SFI in a UL slot, and transmit DCI for scheduling URLLC data using given frequency resources in the UL slot (or symbol) of the gNB #1. When detecting the DCI, the gNB #1 may apply at least one of puncturing and rate matching to eMBB data in resources in which the URLLC data is scheduled. Alternatively, the transmission of the eMBB data may be stopped in the resources.

As described above, in the second dynamic resource allocation, URLLC resources are dynamically allocated by DCI transmitted from the gNB#2 that transmits/receives URLLC data. Further, the gNB #1 detects the DCI in the UL slot and determines URLLC resources indicated by the DCI as blank resources. As a result, in the second dynamic resource allocation, even when different gNBs #1 and #2 transmit/receive URLLCC data and eMBB data using the same frequency, the interference between a plurality of cells formed by the gNBs #1 and #2 can be reduced.

As described above, in the second aspect, resources for specific data (for example, URLLC data) are dynamically allocated, and the resources become blank resources in a cell where another data (for example, eMBB data) is transmitted/received. Consequently, even when the same frequency is used in both a cell where specific data is transmitted/received and a cell where another data is transmitted/received, the interference between the cells can be reduced.

### (Third Aspect)

In a third aspect, a combination (hybrid scheme) of semi-static resource allocation and dynamic resource allocation for URLLC data will be described. In the third aspect, at least a part of the first aspect and at least a part of the second aspect may be combined.

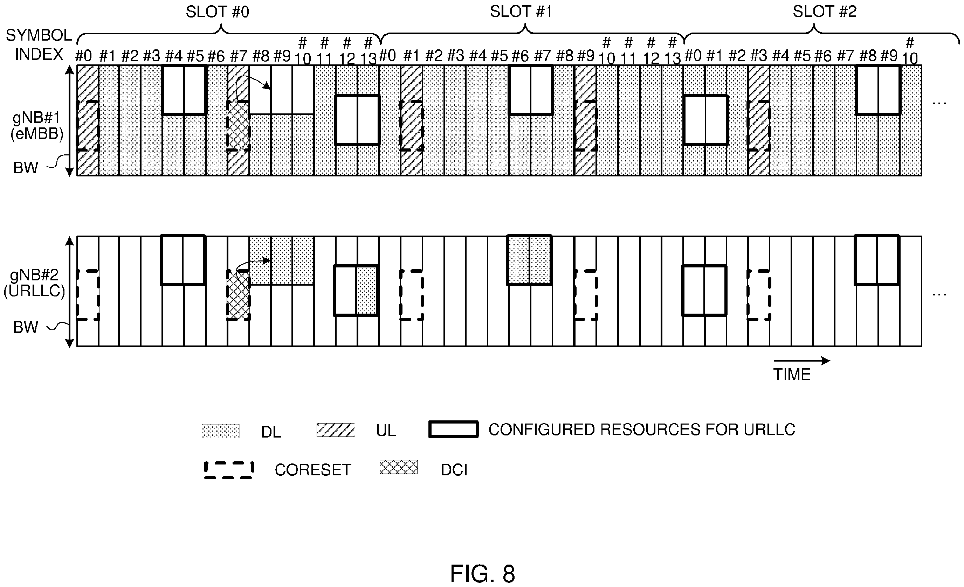

Fig. 8 is a diagram illustrating an example of the hybrid scheme according to the third aspect. Fig. 8 illustrates an example of a combination of the semi-static resource allocation illustrated in Figs. 4A and 4B and the second dynamic resource allocation illustrated in Figs. 7A and 7B. The hybrid scheme is not limited to that illustrated in Fig. 8, and the semi-static resource allocation may be combined with the first example (for example, Figs. 5A and 5B) or the second example (for example, Figs. 6A and 6B) of the first dynamic resource allocation.

As illustrated in Fig. 8, resources for URLLC data may be semi-statically and periodically configured in a URLLC UE within a given bandwidth (BW). In addition, a CORESET for DCI that schedules the URLLC data may be periodically configured.

As illustrated in Fig. 8, the CORESET monitored by at least one of the URLLC UE, the gNB #1, and the gNB #2 described in the second aspect may be configured with a period longer than that of configured resources for the URLLC data.

For example, in Fig. 8, the gNB #2 transmits DCI for scheduling the URLLC data in a CORESET of a symbol #7 in a slot #0. The gNB #1 monitors the CORESET and detects the DCI. The gNB #1 determines URLLC resources indicated by the DCI as blank resources.

Further, in Fig. 8, the gNB #2 may transmit the URLLC data using some of configured resources of symbols #12 and #13 in the slot #0 (here, symbol #13). Further, the gNB #2 may transmit the URLLC data using configured resources of symbols #6 and #7 in a slot #1.

In the third aspect, signaling between gNBs, signaling for URLLC UE, and signaling for eMBB UE may adopt at least one of signaling described in the first aspect and signaling described in the second aspect.

### (Other Aspects)

While the second aspect has described an example in which the information (URLLC resource information) about URLLC resources (blank resources) is included in DCI (see, for example, Figs. 5 to 7), the present invention is not limited thereto. The URLLC resource information may be included in other signals (for example, wake-up signal (WUS)).

The WUS may be a signal that triggers PDCCH monitoring or a signal that is transmitted when the PDCCH monitoring period is changed. The WUS may be referred to as "start signal," "awakening signal," "start command signal," "reception command signal," "paging command signal," "PDCCH monitoring trigger signal," or the like.

Further, in the second dynamic resource allocation of the second aspect, an example has been described in which the gNB #1 detects DCI from the gNB #2 in an uplink slot. The DCI may be transmitted from the gNB #2 using a downlink control channel (for example, PDCCH). Alternatively, information about URLLC resources scheduled in the gNB #2 (URLLC resource information) may be transmitted from the gNB #2 to the gNB #1 using other control channels (for example, uplink control channel (for example, PUCCH (Physical Uplink Control Channel))).

Moreover, in the second dynamic resource allocation of the second aspect, the gNB #2 may transmit the URLLC resource information using a DFT-spread OFDM signal (single carrier) or an OFDM signal (multi-carrier).

### (Radio Communication System)

Now, the configuration of a radio communication system according to the present embodiment will be described below. The radio communication method according to each of the above aspects is applied to this radio communication system. The radio communication methods according to the respective aspects may be applied individually or in combination.

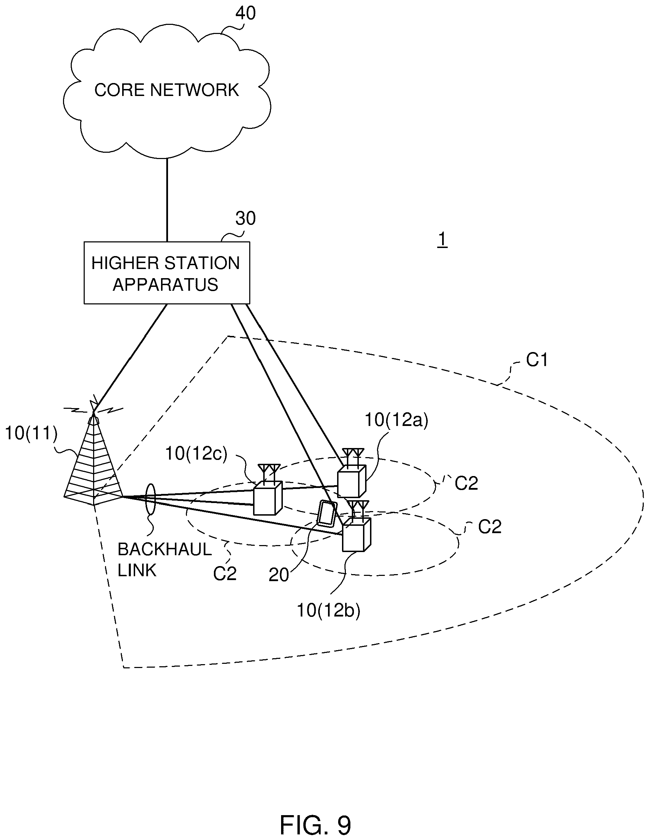

Fig. 9 is a diagram illustrating an example of a schematic configuration of the radio communication system according to the present embodiment. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit. The radio communication system 1 may be a non-standalone type (NR NSA) in which the existing RAT (for example, SUPER 3G, LTE-A (LTE-Advanced), IMT-Advanced, or 4G) and a new RAT (for example, 5G, FRA (future radio access), NR (new RAT), or NR+) operate in cooperation with each other.

The radio communication system 1 illustrated in Fig. 9 includes a radio base station 11 that forms a macro cell C1 and radio base stations 12a to 12c that are placed within the macro cell C1 and that form small cells C2, which are narrower than the macro cell C1. Also, user terminals 20 are placed in the macro cell C1 and in each small cell C2. It may be configured that different RATs and/or numerologies are applied to the cells. The numerology may be a communication parameter unique to RAT (for example, at least one of subcarrier interval, symbol length, CP length, and TTI length).

The user terminal 20 can connect with both the radio base station 11 and the radio base stations 12. It is assumed that the user terminal 20 uses the macro cell C1 and the small cell C2 using different frequencies at the same time by CA or DC. Furthermore, the user terminals 20 may adopt CA or DC using a plurality of cells (CCs) (for example, two or more CCs). The user terminal can use a licensed band CC and an unlicensed band CC as a plurality of cells.

Moreover, the user terminal 20 can perform communication in each cell using time division duplex (TDD) or frequency division duplex (FDD). A TDD cell and an FDD cell may be referred to as "TDD carrier (frame configuration type 2)" and "FDD carrier (frame configuration type 1)," respectively.

Further, each cell (carrier) may adopt one or both of a TTI having a relatively long time length (for example, 1 ms) (also referred to as "subframe," "normal TTI," "long TTI," "normal subframe," "long subframe" or "slot," or the like) and a TTI having a relatively short time length (also referred to as "short TTI," "short subframe," "slot," "sub-slot" or "mini-slot," or the like). TTIs of different time lengths may be present in each cell.

Between the user terminal 20 and the radio base station 11, communication can be carried out using a carrier of a relatively low frequency band (for example, 2 GHz) (referred to as "existing carrier," "legacy carrier," or the like). Meanwhile, between the user terminal 20 and the radio base stations 12, a carrier of a frequency band higher than that of the existing carrier (for example, 3.5 GHz, 5 GHz, 30 to 70 GHz, or the like) or a carrier of the same frequency band as that of the existing carrier may be used. Note that the configuration of the frequency band for use in each radio base station is by no means limited thereto.

A configuration may be employed here in which wire connection (for example, optical fiber in compliance with CPRI (common public radio interface), X2 interface, or the like) or wireless connection is established between the radio base station 11 and the radio base station 12 (or between two radio base stations 12).

The radio base station 11 and the radio base station 12 are each connected with a higher station apparatus 30, and are connected with a core network 40 via the higher station apparatus 30. Note that the higher station apparatus 30 may be, for example, an access gateway apparatus, a radio network controller (RNC), a mobility management entity (MME), or the like, but is by no means limited thereto. Also, each radio base station 12 may be connected with the higher station apparatus 30 via the radio base station 11.

Note that the radio base station 11 is a radio base station having a relatively wide coverage, and may be referred to as "macro base station," "central node," "eNB (eNodeB)," "transmitting/receiving point," or the like. Also, the radio base station 12 is a radio base station having a local coverage, and may be referred to as "small base station," "micro base station," "pico base station," "femto base station," "HeNB (Home eNodeB)," "RRH (Remote Radio Head)," "transmitting/receiving point," or the like.

Further, the LTE base station (LTE eNB) illustrated in Figs. 1, 2 and 8 may be the radio base station 11 and/or the radio base station 12. Moreover, the NR base station (NR gNB) may be the radio base station 11 and/or the radio base station 12. Hereinafter the radio base stations 11 and 12 will be collectively referred to as "radio base stations 10," when the radio base stations 11 and 12 are not distinguished.

Each user terminal 20 is a terminal to support one or more RATs such as at least one of LTE, LTE-A, NR, and 5G, and may be either a mobile communication terminal (mobile station) or a stationary communication terminal (fixed station).

In the radio communication system 1, as a radio access scheme, orthogonal frequency division multiple access (OFDMA) is applied to a downlink (DL), and single-carrier frequency division multiple access (SC-FDMA) is applied to an uplink (UL). OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to reduce interference between terminals by dividing a system bandwidth into bands formed with one or continuous resource blocks per terminal, and allowing a plurality of terminals to use mutually different bands. Note that the uplink and downlink radio access schemes are not limited to the combinations of these, and OFDMA may be used in the UL.

In the radio communication system 1, a DL data channel used by each user terminal 20 on a shared basis (also referred to as PDSCH (physical downlink shared channel), "DL shared channel," or the like), a broadcast channel (PBCH (physical broadcast channel)), a L1/L2 control channel, and the like are used as DL channels. At least one of user data, higher layer control information, SIB (system information block), and the like is communicated in the PDSCH. Also, the MIB (master information block) is communicated in the PBCH.

The L1/L2 control channel includes a DL control channel (also referred to as PDCCH (Physical Downlink Control Channel), EPDCCH (Enhanced Physical Downlink Control Channel), NR-PDCCH, or the like), a PCFICH (Physical Control Format Indicator Channel), a PHICH (Physical Hybrid-ARQ Indicator Channel), and the like. Downlink control information (DCI), including PDSCH and PUSCH scheduling information, and the like, is communicated by the PDCCH. The number of OFDM symbols to use for the PDCCH is communicated by the PCFICH. The EPDCCH is frequency-division-multiplexed with the PDSCH and used to communicate DCI and the like, similarly to the PDCCH. At least one of PHICH, PDCCH, and EPDCCH can communicate PUSCH transmission acknowledgement information (also referred to as "A/N," "HARQ-ACK," "HARQ-ACK bit," "A/N codebook," or the like).

In the radio communication system 1, an UL data channel used by each user terminal 20 on a shared basis (also referred to as PUSCH (Physical Uplink Shared Channel), UL shared channel, NR-PUSCH, or the like), a UL control channel (PUCCH (Physical Uplink Control Channel) or NR-PUCCH), a random access channel (PRACH (Physical Random Access Channel)), and the like are used as UL channels. User data and higher layer control information are communicated by the PUSCH. Uplink control information (UCI) including at least one of PDSCH transmission acknowledgement information (A/N, HARQ-ACK), channel state information (CSI), scheduling request (SR), and the like is communicated by the PUSCH or the PUCCH. By the PRACH, random access preambles for establishing connections with cells can be communicated.

### <Radio Base Station>

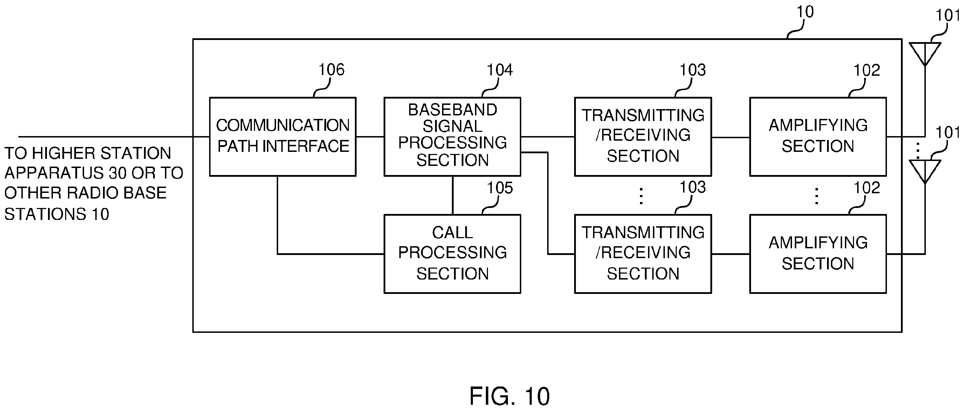

Fig. 10 is a diagram illustrating an example of an overall configuration of a radio base station according to the present embodiment. A radio base station 10 has a plurality of transmitting/receiving antennas 101, amplifying sections 102, transmitting/receiving sections 103, a baseband signal processing section 104, a call processing section 105, and a communication path interface 106. Note that one or more transmitting/receiving antennas 101, amplifying sections 102 and transmitting/receiving sections 103 may be provided.

User data to be transmitted from the radio base station 10 to the user terminal 20 on a downlink is input from the higher station apparatus 30 to the baseband signal processing section 104, via the communication path interface 106.

In the baseband signal processing section 104, the user data is subjected to transmission processes, including a PDCP (Packet Data Convergence Protocol) layer process, division and coupling of the user data, RLC (Radio Link Control) layer transmission processes such as RLC retransmission control, MAC (Medium Access Control) retransmission control (for example, HARQ (Hybrid Automatic Repeat Request) process), scheduling, transport format selection, channel coding, rate matching, scrambling, an inverse fast Fourier transform (IFFT) process and a precoding process, and the result is forwarded to each transmitting/receiving section 103. Furthermore, downlink control signals are also subjected to transmission processes such as channel coding and/or an inverse fast Fourier transform process, and forwarded to the transmitting/receiving sections 103.

Baseband signals that are pre-coded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101.

The transmitting/receiving section 103 can be constituted by a transmitters/receiver, a transmitting/receiving circuit or a transmitting/receiving apparatus that can be described based on general understanding of the technical field to which the present invention pertains. Note that the transmitting/receiving section 103 may be configured as a transmitting/receiving section in one entity, or may be constituted by a transmitting section and a receiving section.

Meanwhile, as for UL signals, radio frequency signals that are received in the transmitting/receiving antennas 101 are amplified in the amplifying sections 102. The transmitting/receiving sections 103 receive the UL signals amplified in the amplifying sections 102. The received signals are converted into the baseband signal through frequency conversion in the transmitting/receiving sections 103 and output to the baseband signal processing section 104.

In the baseband signal processing section 104, UL data that is included in the UL signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs at least one of call processing such as setting up and releasing communication channels, the management of the state of the radio base stations 10, and the management of radio resources.

The communication path interface 106 transmits and receives signals to and from the higher station apparatus 30 via a given interface. Also, the communication path interface 106 may transmit and receive signals (backhaul signaling) with adjacent radio base stations 10 via a backhaul link (which is, for example, optical fiber in compliance with CPRI (common public radio interface) or X2 interface). In the present embodiment, the communication path interface 106 can constitute a transmitting section and/or a receiving section that transmits and/or receives signals to/from other radio base stations 10.

The transmitting/receiving sections 103 transmit DL signals (for example, at least one of DCI, DL data, and DL reference signals). The transmitting/receiving sections 103 also receive UL signals (for example, at least one of UL data, UCI, and UL reference signals).

Here, the radio base station 10 may be either a radio base station that transmits/receives specific data (for example, URLLC data (at least one of DL data and UL data)) (for example, also referred to as "URLLC base station," "first radio base station," or the like) or a radio base station that transmits/receives data other than the specific data (for example, eMBB data (at least one of DL data and UL data)) (for example, also referred to as "eMBB base station," "second radio base station," or the like).

The communication path interface 106 may receive at least one of the information about resources configured within a given bandwidth (configured resource information) and the information about resources for specific data (URLLC resource information) from another radio base station 10 using the given bandwidth (for example, eMBB base station or URLLC base station), or may transmit at least one of these pieces of information to another radio base station (first to third aspects).

The transmitting/receiving sections 103 may transmit the information about resources configured within a given bandwidth (configured resource information) (first aspect).

Further, the transmitting/receiving sections 103 may transmit first downlink control information (DCI) within a first control resource set configured within the given bandwidth (second and third aspects).

The transmitting/receiving sections 103 may also transmit second downlink control information (DCI) within a second control resource set configured within the given bandwidth, in addition to the first control resource set in which the first downlink control information (DCI) is transmitted from the first radio base station within the given bandwidth (second and third aspects).

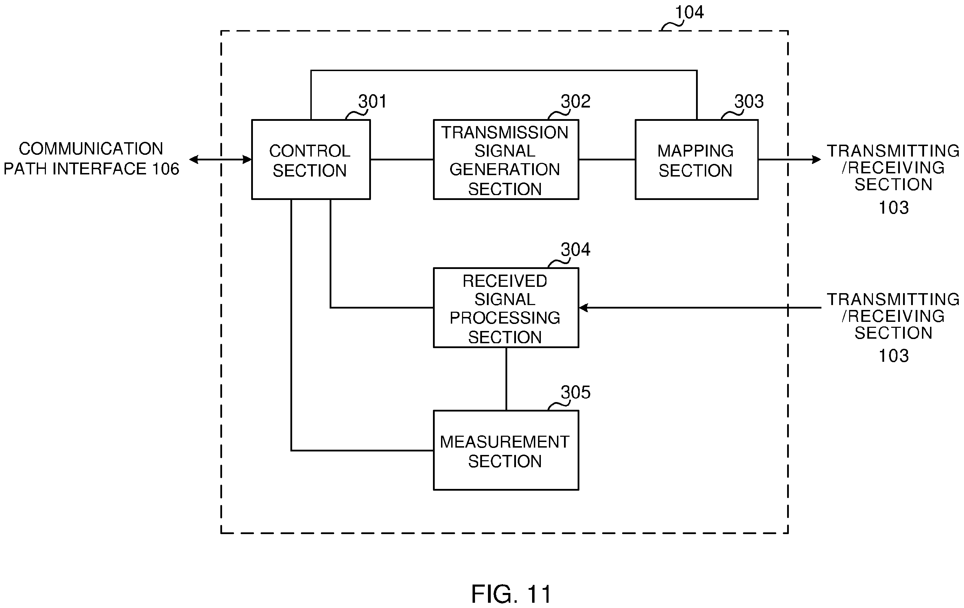

Fig. 11 is a diagram illustrating an example of a functional configuration of the radio base station according to the present embodiment. Note that, although Fig. 11 primarily illustrates functional blocks that pertain to characteristic parts of the present embodiment, the radio base station 10 may have other functional blocks that are necessary for radio communication as well. As illustrated in Fig. 11, the baseband signal processing section 104 includes a control section 301, a transmission signal generation section 302, a mapping section 303, a received signal processing section 304, and a measurement section 305. Each MAC entity of the present embodiment may be configured by at least one of the control section 301, the transmission signal generation section 302, and the received signal processing section 304.

The control section 301 controls the whole of the radio base station 10. The control section 301 controls at least one of, for example, generation of DL signals by the transmission signal generation section 302, mapping of DL signals by the mapping section 303, UL signal receiving processes by the received signal processing section 304 (for example, demodulation and the like), and measurement by the measurement section 305.

Specifically, the control section 301 controls DL signal scheduling and/or transmission processes (for example, modulation, coding, transport block size (TBS), and the like) based on the UCI fed back from the user terminal 20. When the TBS exceeds a given threshold value, the control section 301 may apply code block division for dividing the TBS into a plurality of CBs to the DL signals.

The control section 301 also controls the UL signal scheduling based on the UCI fed back from the user terminal 20. The control section 301 controls the UL signal receiving processes (for example, at least one of demodulation, decoding, and carrier separation). For example, the control section 301 controls the receiving processes of receiving LTE UL signals and NR UL signals using a LTE UL carrier and a NR UL carrier, respectively.

Further, the control section 301 may control at least one of the transmission of the specific data (for example, URLLC data, first data) to the user terminal 20 and the reception of the specific data from the user terminal 20 using resources configured within the given bandwidth (first and third aspects).

Furthermore, the control section 301 may control at least one of rate matching and puncturing of data (for example, eMBB data, second data) in the resources configured within the given bandwidth (first to third aspects).

Moreover, the control section 301 may control the transmission of first downlink control information (DCI) in the first control resource set configured within the given bandwidth. Further, the control section 301 may control at least one of the transmission and reception of specific data granted by the first DCI (second and third aspects).

The control sections 301 may also control the transmission of second downlink control information (DCI) in the second control resource set configured within the given bandwidth, in addition to the first control resource set in which the first downlink control information (DCI) is transmitted from another radio base station 10 (for example, URLLC base station, first radio base station) within the given bandwidth (first dynamic resource allocation of second aspect, and third aspect). The control section 301 may also control at least one of rate matching, puncturing, stopping transmission, and stopping reception of data (for example, eMBB data) in the resources indicated by the second DCI.

The control section 301 may also control monitoring of downlink control information (DCI) transmitted from another radio base station 10 (for example, URLLC base station, first radio base station) within the given bandwidth (second dynamic resource allocation of second aspect, and third aspect).

The control section 301 can be constituted by a controller, a control circuit, or a control apparatus that can be described based on general understanding of the technical field to which the present invention pertains.

The transmission signal generation section 302 may generate DL signals (including at least one of DL data, DCI, DL reference signals, and control information by higher layer signaling) based on commands from the control section 301, and output the DL signals to the mapping section 303.

The transmission signal generation section 302 can be constituted by a signal generator, a signal generating circuit, or a signal generation apparatus that can be described based on general understanding of the technical field to which the present invention pertains.

The mapping section 303 maps the DL signals generated in the transmission signal generation section 302 to given radio resources based on commands from the control section 301, and outputs these to the transmitting/receiving sections 103. The mapping section 303 can be constituted by a mapper, a mapping circuit, or a mapping apparatus that can be described based on general understanding of the technical field to which the present invention pertains.

The received signal processing section 304 performs receiving processes of receiving the UL signals transmitted from the user terminal 20 (for example, at least one of demapping, demodulation, decoding, and carrier separation). Also, the received signal processing section 304 may output received signals and/or signals subjected to the receiving processes to the measurement section 305. Further, the received signal processing section 304 performs UCI receiving processes based on a UL control channel configuration commanded by the control section 301.

The measurement section 305 may measure, for example, the UL channel quality based on the received power (for example, RSRP (Reference Signal Received Power) and/or received quality (for example, RSRQ (Reference Signal Received Quality)) of UL reference signals. The measurement results may be output to the control section 301.

### <User Terminal>

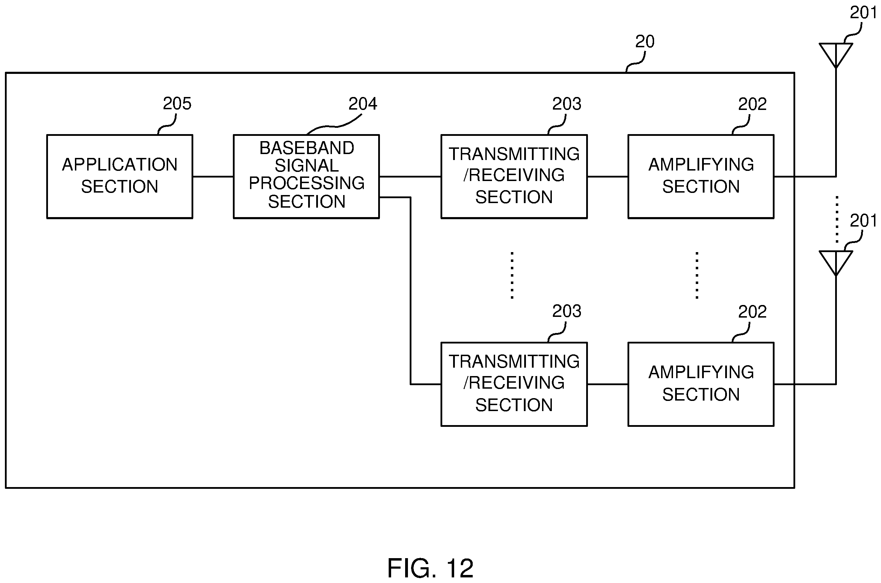

Fig. 12 is a diagram illustrating an example of an overall configuration of a user terminal according to the present embodiment. The user terminal 20 includes a plurality of transmitting/receiving antennas 201 for MIMO communication, a plurality of amplifying sections 202, a plurality of transmitting/receiving sections 203, a baseband signal processing section 204, and an application section 205. The user terminal 20 supports a plurality of RATs (for example, LTE and NR).

Radio frequency signals that are received by the transmitting/receiving antennas 201 are amplified by the amplifying sections 202. The transmitting/receiving sections 203 receive the DL signals amplified by the amplifying sections 202. The received signals are converted into a baseband signal through frequency conversion in the transmitting/receiving sections 203, and output to the baseband signal processing section 204.

The baseband signal processing section 204 performs at least one of an FFT process, error correction coding, a retransmission control receiving process, and the like, on the baseband signal that is input. DL data is forwarded to the application section 205. The application section 205 performs processes related to higher layers above the physical layer and the MAC layer, and the like.

Meanwhile, UL data is input from the application section 205 to the baseband signal processing section 204. The baseband signal processing section 204 performs at least one of a retransmission control process (for example, HARQ process), channel coding, rate matching, puncturing, a discrete Fourier transform (DFT) process, an IFFT process, and the like, and the result is forwarded to each transmitting/receiving section 203. At least one of channel coding, rate matching, puncturing, the DFT process, the IFFT process, and the like is performed on UCI (for example, at least one of A/N of DL signal, channel state information (CSI), scheduling request (SR), and the like), and the result is forwarded to each transmitting/receiving section 203.

Baseband signals that are output from the baseband signal processing section 204 are converted into a radio frequency band in the transmitting/receiving sections 203 and transmitted. The radio frequency signals that are subjected to frequency conversion in the transmitting/receiving sections 203 are amplified in the amplifying sections 202, and transmitted from the transmitting/receiving antennas 201.

The transmitting/receiving sections 203 transmit DL signals (for example, at least one of DCI, DL data, and DL reference signals). The transmitting/receiving sections 203 also receive UL signals (for example, at least one of UL data, UCI, and UL reference signals).

Here, the user terminal 20 may be either a user terminal that transmits/receives specific data (for example, URLLC data (at least one of DL data and UL data)) (also referred to as, for example, "URLLC UE," "first user terminal," or the like) or a user terminal that transmits/receives data other than the specific data (for example, eMBB data (at least one of DL data and UL data)) (also referred to as, for example, "eMBB UE," "second user terminal," or the like).

The transmitting/receiving sections 203 may receive the information about resources configured within a given bandwidth (configured resource information) (first aspect). The transmitting/receiving sections 203 may receive the information about resources from the radio base station 10 (URLLC base station or first radio base station) or another radio base station 10 using the given bandwidth (eMBB base station or second radio base station).

Further, the transmitting/receiving sections 203 may receive first downlink control information (DCI) in a first control resource set configured within the given bandwidth (second aspect).

Further, the transmitting/receiving sections 203 may receive second downlink control information (DCI) in a second control resource set configured within the given bandwidth, in addition to the first control resource set in which the first downlink control information (DCI) is transmitted from the first radio base station within the given bandwidth (second aspect).

The transmitting/receiving section 203 can be constituted by a transmitter/receiver, a transmitting/receiving circuit, or a transmitting/receiving apparatus that can be described based on general understanding of the technical field to which the present invention pertains. Note that the transmitting/receiving section 203 may be configured as a transmitting/receiving section in one entity, or may be constituted by a transmitting section and a receiving section.

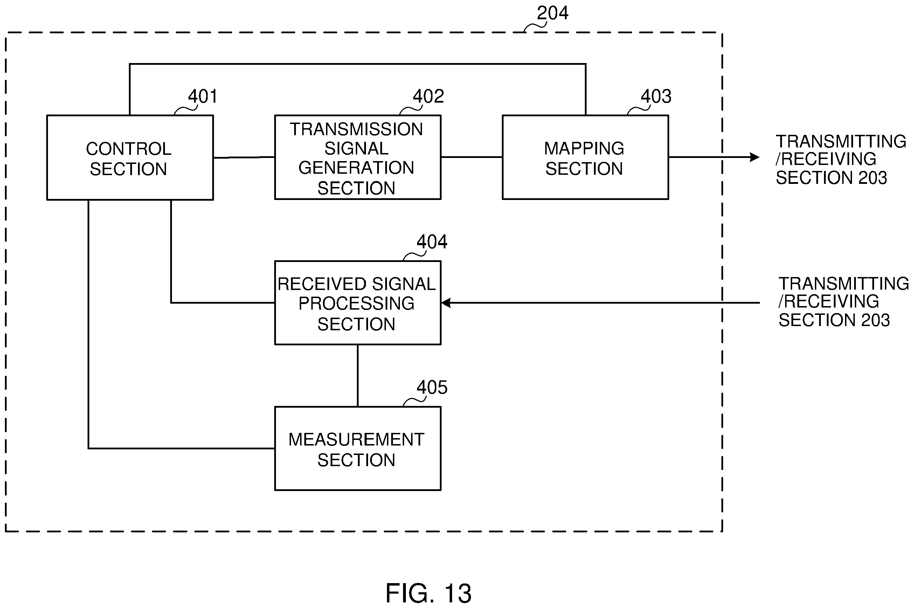

Fig. 13 is a diagram illustrating an example of a functional configuration of a user terminal according to the present embodiment. Note that, although Fig. 13 primarily illustrates functional blocks that pertain to characteristic parts of the present embodiment, the user terminal 20 may have other functional blocks that are necessary for radio communication as well. Each MAC entity of the present embodiment may be configured by at least one of a control section 401, a transmission signal generation section 402, and a received signal processing section 404.

As illustrated in Fig. 13, the baseband signal processing section 204 provided in the user terminal 20 includes the control section 401, the transmission signal generation section 402, a mapping section 403, the received signal processing section 404, and a measurement section 405.

The control section 401 controls the whole of the user terminal 20. The control section 401 controls at least one of, for example, generation of UL signals by the transmission signal generation section 402, mapping of UL signals by the mapping section 403, DL signal receiving processes by the received signal processing section 404, and measurement by the measurement section 405.

Specifically, the control section 401 controls the DL signal receiving processes by the received signal processing section 404 (for example, demodulation, decoding, carrier separation) based on DCI (DL assignment).

The control section 401 also controls UL signal generation and transmission processes (for example, encoding, modulation, mapping, and the like) based on DCI (UL grant).

Further, the control section 401 may control at least one of reception of specific data from the radio base station 10 (for example, URLLC base station or first radio base station) and transmission of the specific data to the radio base station 10 using resources configured within the given bandwidth (first and third aspects).

The configured resources may be blank resources in a second radio base station using the given bandwidth.

The control section 401 may also control, in the configured resources, at least one of rate matching, puncturing, stopping transmission, and stopping reception of at least one of data (for example, eMBB data) from the radio base station 10 using the given bandwidth (eMBB base station or second radio base station) and data to the radio base station 10 (first to third aspects).

Moreover, the control section 401 may control monitoring of first downlink control information (DCI) transmitted from the first radio base station within the first control resource set configured within the given bandwidth (second and third aspects). The control section 401 may also control at least one of the reception of specific data (for example, URLLC data) from the radio base station 10 (for example, URLLC base station or first radio base station) and the transmission of the specific data to the radio base station 10 based on the first DCI (second and third aspects).

Moreover, the control section 401 may control monitoring of second downlink control information (DCI) transmitted from the second radio base station within the second control resource set configured within the given bandwidth (second and third aspects). The control section 401 may also control at least one of the reception of the specific data from the radio base station 10 (for example, URLLC base station or first radio base station) and the transmission of the specific data to the radio base station 10 using the resources indicated by the second DCI, based on the first DCI (second and third aspects).

When the second downlink control information (DCI) transmitted from the radio base station 10 (eMBB base station or second radio base station) in the second control resource set configured within the given bandwidth is received by another radio base station 10 (URLLC base station or first radio base station), the first DCI may be used for scheduling the specific data in at least a part of the resources indicated by the second DCI (second and third aspects).

When the first DCI transmitted from the radio base station 10 (URLLC base station or first radio base station) in the first control resource set is received by another radio base station 10 (eMBB base station or second radio base station) using the given bandwidth, the resources indicated by the first DCI may be used as blank resources in the second radio base station (second and third aspects).

The control section 401 can be constituted by a controller, a control circuit, or a control apparatus that can be described based on general understanding of the technical field to which the present invention pertains.

The transmission signal generation section 402 generates transmission acknowledgement information about UL signals and DL signals (for example, performs encoding, rate matching, puncture, modulation, and the like) based on commands from the control section 401, and outputs the result to the mapping section 403. The transmission signal generation section 402 can be constituted by a signal generator, a signal generating circuit, or a signal generation apparatus that can be described based on general understanding of the technical field to which the present invention pertains.

The mapping section 403 maps the transmission acknowledgement information about UL signals and DL signals generated in the transmission signal generation section 402 to radio resources based on commands from the control section 401, and outputs the result to the transmitting/receiving section 203. The mapping section 403 can be constituted by a mapper, a mapping circuit, or a mapping apparatus that can be described based on general understanding of the technical field to which the present invention pertains.

The received signal processing section 404 performs DL signal receiving processes (for example, demapping, demodulation, decoding, and the like). For example, the received signal processing section 404 may perform decoding processes in units of CB in response to commands from the control section 401, and output the decoding result in each CB to the control section 401.

The received signal processing section 404 outputs the information received from the radio base station 10 to the control section 401. The received signal processing section 404 outputs, for example, broadcast information, system information, upper layer control information acquired by higher layer signaling such as RRC signaling, L1/L2 control information (for example, UL grant, DL assignment), and the like to the control section 401.

The received signal processing section 404 can be constituted by a signal processor, a signal processing circuit, or a signal processing apparatus that can be described based on general understanding of the technical field to which the present invention pertains. Also, the received signal processing section 404 can constitute the receiving section according to the present invention.

The measurement section 405 measures the channel state based on reference signals (for example, CSI-RS) from the radio base station 10, and outputs the measurement result to the control section 401. The channel state may be measured for each CC.

The measurement section 405 can be constituted by a signal processor, a signal processing circuit, or a signal processing apparatus and a measurement device, a measurement circuit, or a measurement apparatus that can be described based on general understanding of the technical field to which the present invention pertains.

### (Hardware Configuration)

Note that the block diagrams that have been used to describe the above embodiment illustrate blocks in functional units. These functional blocks (components) may be implemented in arbitrary combinations of at least one of hardware and software. In addition, the method for implementing each functional block is not particularly limited. That is, each functional block may be implemented by one apparatus that is physically or logically aggregated, or may be implemented by directly or indirectly connecting two or more physically or logically separated two or apparatuses (via wire or wireless, for example) and using these apparatuses.

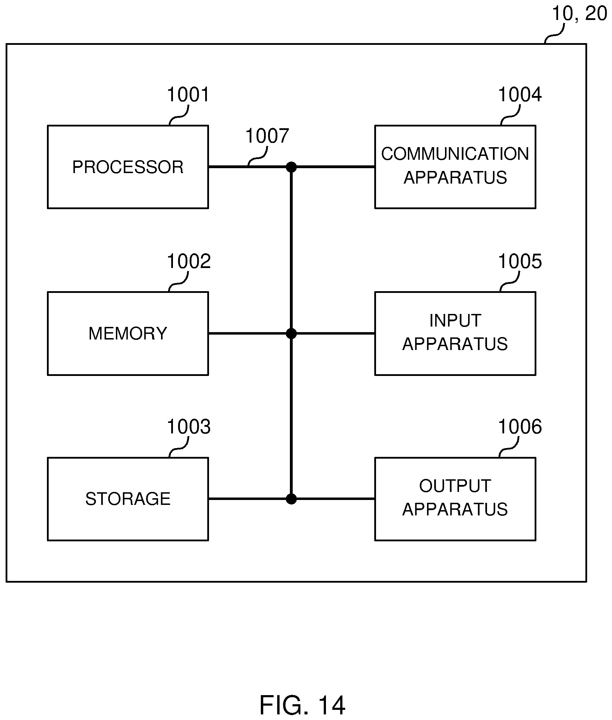

For example, the radio base station, the user terminal, and the like according to an embodiment of the present disclosure may function as a computer that performs processes of the radio communication method according to the present disclosure. Fig. 14 is a diagram illustrating an example of a hardware configuration of the radio base station and the user terminal according to an embodiment. Physically, the radio base stations 10 and the user terminal 20 that have been described above may be configured as a computer apparatus that includes a processor 1001, a memory 1002, a storage 1003, a communication apparatus 1004, an input apparatus 1005, an output apparatus 1006, and a bus 1007.

Note that, in the following description, the word "apparatus" may be replaced by "circuit," "device," "unit," or the like. Note that the hardware configuration of the radio base station 10 and the user terminal 20 may include one or a plurality of each of the apparatuses illustrated in the drawings, or does not need to include some of the apparatuses.

For example, while only one processor 1001 is illustrated, a plurality of processors may be provided. Furthermore, processes may be implemented with one processor, or processes may be implemented at the same time, in sequence, or in different manners, on one or more processors. Note that the processor 1001 may be implemented with one or more chips.

Each of the functions of the radio base station 10 and the user terminal 20 is implemented by, for example, reading given software (program) on hardware such as the processor 1001 and the memory 1002, and by controlling the calculations in the processor 1001, the communication in the communication apparatus 1004, and at least one of data reading and data writing in the memory 1002 and the storage 1003.

The processor 1001 may control the whole computer by, for example, running an operating system. The processor 1001 may be configured with a central processing unit (CPU), which includes interfaces with peripheral apparatuses, a control apparatus, a computing apparatus, a register, and the like. For example, the baseband signal processing section 104 (204) described above, the call processing section 105 described above, and the like may be implemented by the processor 1001.

Furthermore, the processor 1001 reads programs (program codes), software modules, data, and the like from at least one of the storage 1003 and the communication apparatus 1004 into the memory 1002, and executes various processes according to these. As for the programs, programs to allow computers to execute at least some of the operations described in the above embodiment may be used. For example, the control section 401 of the user terminal 20 may be implemented by control programs that are stored in the memory 1002 and operate on the processor 1001, and other functional blocks may be implemented in the same manner.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory), and other appropriate storage media. The memory 1002 may be referred to as "register," "cache," "main memory (primary storage apparatus)," or the like. The memory 1002 can store executable programs (program codes), software modules, and the like for implementing the radio communication method according to an embodiment of the present disclosure.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and the like), a digital versatile disc, and a Blu-ray (registered trademark) disk), a removable disk, a hard disk drive, a smart card, a flash memory device (for example, a card, a stick, a key drive, and the like), a magnetic stripe, a database, a server, and other appropriate storage media. The storage 1003 may be referred to as "secondary storage apparatus."

The communication apparatus 1004 is hardware (transmitting/receiving device) for allowing inter-computer communication by using at least one of wired and wireless networks, and may be referred to as, for example, "network device," "network controller," "network card," "communication module," or the like. The communication apparatus 1004 may be configured to include a high frequency switch, a duplexer, a filter, a frequency synthesizer, and the like in order to achieve at least one of, for example, frequency division duplex (FDD) and time division duplex (TDD). For example, the transmitting/receiving antenna 101 (201), the amplifying section 102 (202), the transmitting/receiving section 103 (203), the communication path interface 106, and the like that have been described above may be implemented by the communication apparatus 1004.

The input apparatus 1005 is an input device for receiving input from the outside (for example, keyboard, mouse, microphone, switch, button, sensor, and the like). The output apparatus 1006 is an output device for allowing sending output to the outside (for example, display, speaker, LED (light emitting diode) lamp, and the like). Note that the input apparatus 1005 and the output apparatus 1006 may be provided in an integrated structure (for example, touch panel).

Furthermore, these apparatuses, including the processor 1001, the memory 1002, and the like, are connected by the bus 1007 so as to communicate information. The bus 1007 may be formed with a single bus, or may be formed with buses that vary between apparatuses.

Also, the radio base station 10 and the user terminal 20 may be configured to include hardware such as a microprocessor, a digital signal processor (DSP), an ASIC (Application-Specific Integrated Circuit), a PLD (Programmable Logic Device), and an FPGA (Field Programmable Gate Array), and all or some of the functional blocks may be implemented by the hardware. For example, the processor 1001 may be implemented with at least one of these pieces of hardware.

### (Modifications)

Note that the terminology used in the present disclosure and the terminology that is needed to understand the present disclosure may be replaced by other terms that have the same or similar meanings. For example, at least one of "channels" and "symbols" may be replaced by "signals" (or "signaling"). The signal may also be a message. A reference signal may be abbreviated as an "RS," and may be referred to as a "pilot," "pilot signal," or the like, depending on which standard applies. Furthermore, a component carrier (CC) may be referred to as "cell," "frequency carrier," "carrier frequency," or the like.

A radio frame may be comprised of one or a plurality of periods (frames) in a time domain. One or each of a plurality of periods (frames) constituting a radio frame may be referred to as "subframe." Furthermore, a subframe may be comprised of one or a plurality of slots in the time domain. A subframe may be a fixed time duration (for example, 1 ms) that is not dependent on numerology.

Here, the numerology may be a communication parameter applied to at least one of transmission and reception of a certain signal or channel. For example, the numerology may indicate at least one of a subcarrier spacing (SCS), a bandwidth, a symbol length, a cyclic prefix length, a transmission time interval (TTI), the number of symbols per TTI, a radio frame configuration, a specific filtering process to be performed in a frequency domain by a transmitter/receiver, a specific windowing process to be performed in a time domain by a transmitter/receiver, and the like.

Furthermore, a slot may be comprised of one or a plurality of symbols (OFDM (orthogonal frequency division multiplexing) symbols, SC-FDMA (single carrier frequency division multiple access) symbols, and the like) in the time domain. Alternatively, a slot may be a time unit based on the numerology.

A slot may include a plurality of mini-slots. Each mini-slot may be comprised of one or a plurality of symbols in the time domain. Also, the mini-slot may be referred to as "sub-slot." A mini-slot may include fewer symbols than slots. A PDSCH (or PUSCH) transmitted in a time unit larger than that of a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all represent the time unit in signal communication. A radio frame, a subframe, a slot, a mini-slot, and a symbol may be each called by other applicable names.

For example, one subframe may be referred to as "transmission time interval (TTI)," a plurality of consecutive subframes may be referred to as "TTI," or one slot or one mini-slot may be referred to as "TTI." That is, at least one of a subframe and a TTI may be a subframe (1 ms) in existing LTE, may be a period shorter than 1 ms (for example, one to thirteen symbols), or may be a period longer than 1 ms. Note that the unit to represent the TTI may be referred to as "slot," "mini slot," or the like, instead of "subframe."

Here, the TTI means the minimum time unit of scheduling in radio communication, for example. For example, in LTE systems, a radio base station schedules radio resources (frequency bandwidth and transmission power that can be used in each user terminal, and the like) to allocate to each user terminal on a TTI basis. Note that the definition of TTIs is not limited thereto.

The TTI may be the transmission time unit of channel-encoded data packets (transport blocks), code blocks, or codewords, or may be the unit of processing in scheduling, link adaptation, or the like. Note that, when a TTI is given, the period of time (for example, number of symbols) in which transport blocks, code blocks, or codewords are actually mapped may be shorter than the TTI.

Note that, when one slot or one mini-slot is referred to as "TTI," one or more TTIs (that is, one or more slots or one or more mini-slots) may be the minimum time unit of scheduling. Also, the number of slots (mini-slots) to constitute this minimum time unit of scheduling may be controlled.

A TTI having a time duration of 1 ms may be referred to as "usual TTI (TTI in LTE Rel. 8 to 12)," "normal TTI," "long TTI," "usual subframe," "normal subframe," "long subframe," or the like. A TTI that is shorter than a usual TTI may be referred to as "shortened TTI," "short TTI," "partial TTI" (or "fractional TTI"), "shortened subframe," "short subframe," "mini-slot," "sub-slot," or the like.

Note that a long TTI (for example, usual TTI, subframe, or the like) may be replaced by a TTI having a time duration exceeding 1 ms, and a short TTI (for example, shortened TTI) may be replaced by a TTI having a TTI duration less than the TTI duration of a long TTI and 1 ms or longer.

A resource block (RB) is the unit of resource allocation in the time domain and the frequency domain, and may include one or a plurality of consecutive subcarriers in the frequency domain.

Also, an RB may include one or a plurality of symbols in the time domain, and may be one slot, one mini-slot, one subframe or one TTI in length. One TTI and one subframe each may be comprised of one or a plurality of resource blocks.

Note that one or a plurality of RBs may be referred to as "PRB (Physical RB)," "subcarrier group (SCG)," "resource element group (REG)," "PRB pair," "RB pair," or the like.

Furthermore, a resource block may be comprised of one or a plurality of resource elements (REs). For example, one RE may be a radio resource field of one subcarrier and one symbol.

Note that the configurations of radio frames, subframes, slots, mini-slots, symbols, and the like described above are merely examples. For example, configurations pertaining to the number of subframes included in a radio frame, the number of slots per a subframe or a radio frame, the number of mini-slots included in a slot, the number of symbols and RBs included in a slot or a mini-slot, the number of subcarriers included in an RB, the number of symbols in a TTI, the symbol length, the length of cyclic prefixes (CPs), and the like can be variously changed.

Also, the information and parameters described in the present disclosure may be represented in absolute values or in relative values with respect to given values, or may be represented using other applicable information. For example, a radio resource may be specified by a given index.

The names used for parameters and the like in the present disclosure are in no respect limiting. For example, since various channels (PUCCH (physical uplink control channel), PDCCH (physical downlink control channel), and the like) and information elements can be identified by any suitable names, the various names assigned to these individual channels and information elements are in no respect limiting.

The information, signals, and the like described in the present disclosure may be represented by using a variety of different technologies. For example, data, instructions, commands, information, signals, bits, symbols, chips, and the like that may be referenced throughout the above description, may be represented by voltages, currents, electromagnetic waves, magnetic fields or particles, optical fields or photons, or any combination of these.

Also, information, signals, and the like can be output at least either from higher layers to lower layers, or from lower layers to higher layers. Information, signals, and the like may be input and output via a plurality of network nodes.

The information, signals, and the like that are input and/or output may be stored in a specific location (for example, memory), or may be managed in a control table. The information, signals, and the like to be input and/or output can be overwritten, updated, or appended. The information, signals, and the like that are output may be deleted. The information, signals, and the like that are input may be transmitted to other apparatuses.

Reporting of information is by no means limited to the aspects/embodiment described in the present disclosure, and other methods may be used as well. For example, reporting of information may be implemented by using physical layer signaling (for example, downlink control information (DCI), uplink control information (UCI)), higher layer signaling (for example, RRC (radio resource control) signaling, broadcast information (master information block (MIB), system information block (SIB), and the like), MAC (medium access control) signaling and the like), and other signals or combinations of these.

Note that physical layer signaling may be referred to as "L1/L2 (Layer 1/Layer 2) control information (L1/L2 control signals)," "L1 control information (L1 control signal)," or the like. Also, RRC signaling may be referred to as "RRC messages," and can be, for example, an RRC connection setup message, an RRC connection reconfiguration message, or the like. MAC signaling may also be reported using, for example, MAC control elements (MAC CEs (Control Elements)).

Further, reporting of given information (for example, reporting of information to effect that "X holds") does not necessarily have to be sent explicitly, and can be sent implicitly (for example, by not reporting this given information, by reporting another information, or the like).

Decisions may be made in values represented by one bit (0 or 1), may be made in Boolean values that represent true or false, or may be made by comparing numerical values (for example, comparison against given value).

Software, whether referred to as "software," "firmware," "middleware," "microcode" or "hardware description language," or called by other names, should be interpreted broadly, to mean instructions, instruction sets, codes, code segments, program codes, programs, subprograms, software modules, applications, software applications, software packages, routines, subroutines, objects, executable files, execution threads, procedures, functions, and the like.

Also, software, commands, information, and the like may be transmitted and received via communication media. For example, when software is transmitted from a website, a server or other remote sources by using at least one of wired technologies (coaxial cables, optical fiber cables, twisted-pair cables, digital subscriber lines (DSLs), and the like) and wireless technologies (infrared radiation, microwaves, and the like), at least one of these wired technologies and wireless technologies are also included in the definition of communication media.

The terms "system" and "network" as used in the present disclosure are used interchangeably.

In the present disclosure, the terms "base station (BS)," "radio base station," "fixed station," "NodeB," "eNodeB (eNB)," "gNodeB (gNB)," "access point," "transmission point," "reception point," "transmission/reception point," "cell," "sector," "cell group," "carrier," "component carrier," "bandwidth part (BWP)," and the like may be used interchangeably. A base station may be referred to as "macro cell," "small cell," "femtocell," "picocell," or the like.

A base station can accommodate one or a plurality of (for example, three) cells (also referred to as "sectors"). When a base station accommodates a plurality of cells, the entire coverage area of the base station can be partitioned into a plurality of smaller areas, and each smaller area can provide communication services through base station subsystems (for example, indoor small base stations (RRHs (Remote Radio Heads)). The term "cell" or "sector" refers to all or part of the coverage area of at least one of a base station and a base station subsystem that provides communication services within this coverage.

In the present disclosure, the terms "mobile station (MS)," "user terminal," "user equipment (UE)," "terminal," and the like may be used interchangeably.

A mobile station may be referred to as "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other suitable terms.

At least one of a base station and a mobile station may be referred to as "transmission apparatus," "reception apparatus," or the like. Note that at least one of the base station and the mobile station may be a device mounted on a mobile body, the mobile body itself, or the like. The mobile body may be a vehicle (for example, car, airplane, and the like), an unmanned mobile body (for example, drone, autonomous car, and the like), or a robot (manned robot or unmanned robot). Note that at least one of the base station and the mobile station also includes a device that does not necessarily move during a communication operation.

Furthermore, the radio base stations in the present disclosure may be interpreted as user terminals. For example, each aspect/embodiment of the present disclosure may be applied to a configuration in which communication between a radio base station and a user terminal is replaced by communication among a plurality of user terminals (may be referred to as, for example, D2D (Device-to-Device) and V2X (Vehicle-to-Everything)). In this case, the user terminal 20 may have the functions of the radio base station 10 described above. In addition, the words such as "uplink" and "downlink" may be replaced by the words corresponding to the terminal-to-terminal communication (for example, "side"). For example, an uplink channel, a downlink channel, and the like may be replaced by a side channel.

Likewise, the user terminals in the present disclosure may be interpreted as radio base stations. In this case, the radio base station 10 may have the functions of the user terminal 20 described above.

Certain actions which have been described in the present disclosure to be performed by base stations may, in some cases, be performed by their upper nodes. In a network comprised of one or a plurality of network nodes with base stations, it is clear that various operations that are performed so as to communicate with terminals can be performed by base stations, one or more network nodes (for example, MMEs (Mobility Management Entities), S-GWs (Serving-Gateways), and the like may be possible, but these are not limiting) other than base stations, or combinations of these.

The aspects/embodiment described in the present disclosure may be used individually or in combinations, which may be switched depending on the mode of implementation. The order of processes, sequences, flowcharts, and the like that have been used to describe the aspects/embodiment of the present disclosure may be reordered as long as inconsistencies do not arise. For example, although various steps have been described in the present disclosure with various components of steps in exemplary orders, the specific orders that are described in the present disclosure are by no means limiting.

The aspects/embodiment described in the present disclosure may be applied to LTE (Long Term Evolution), LTE-A (LTE-Advanced), LTE-B (LTE-Beyond, SUPER 3G, IMT-Advanced, 4G (4th generation mobile communication system), 5G (5th generation mobile communication system), FRA (Future Radio Access), New-RAT (Radio Access Technology), NR (New Radio), NX (New Radio Access), FX (Future generation radio access), GSM (Global System for Mobile Communications) (registered trademark), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other appropriate radio communication systems, next-generation systems that are enhanced based on these, and the like. Further, a plurality of systems may be combined for use (for example, combination of LTE or LTE-A and 5G).

The phrase "based on" used as in the present disclosure does not mean "based only on," unless otherwise specified. In other words, the phrase "based on" means both "based only on" and "based at least on."

Reference to elements with designations such as "first," "second," and the like as used in the present disclosure does not generally limit the number/quantity or order of these elements. These designations are used in the present disclosure only for convenience, as a method for distinguishing between two or more elements. Consequently, reference to the first and second elements does not imply that only two elements may be employed, or that the first element must precede the second element in some way.

The terms "judge" and "determine" as used in the present disclosure may encompass a wide variety of actions. For example, to "judge" and "determine" as used in the present disclosure may be interpreted to mean making judgements and determinations related to judging, calculating, computing, processing, deriving, investigating, looking up (for example, searching table, database or some other data structures), ascertaining, and the like.

Furthermore, to "judge" and "determine" as used in the present disclosure may be interpreted to mean making judgements and determinations related to receiving (for example, receiving information), transmitting (for example, transmitting information), inputting, outputting, accessing (for example, accessing data in memory), and the like.

In addition, to "judge" and "determine" as used in the present disclosure may be interpreted to mean making judgements and determinations related to resolving, selecting, choosing, establishing, comparing, and the like. In other words, to "judge" and "determine" as used in the present disclosure may be interpreted to mean making judgements and determinations related to some action.

"Judgment (determination)" may be interpreted as "assuming," "expecting," "considering," or the like.

The term "maximum transmission power" described in the present disclosure may mean the maximum value of transmission power, the nominal UE maximum transmit power, or the rated UE maximum transmit power.

As used in the present disclosure, the terms "connected" and "coupled," or any variation of these terms mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be interpreted as "access."

As used in the present disclosure, when two elements are connected, these elements may be considered "connected" or "coupled" to each other by using one or more electrical wires, cables, printed electrical connections, and, as a number of non-limiting and non-inclusive examples, by using electromagnetic energy, such as electromagnetic energy having wavelengths in the radio frequency, microwave and optical (both visible and invisible) regions.

In the present disclosure, the phrase "A and B are different" may mean "A and B are different from each other." The terms such as "leave," "coupled," and the like may be interpreted as well.

When the terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

In the present disclosure, when articles, such as "a," "an," and "the" are added in English translation, the present disclosure may include the plural forms of nouns that follow these articles.

Now, although the invention according to the present disclosure has been described in detail above, it should be obvious to a person skilled in the art that the invention according to the present disclosure is by no means limited to the embodiment described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A user terminal comprising:
a receiving section that receives first downlink control information (DCI) transmitted from a first radio base station in a first control resource set configured within a given bandwidth; and
a control section that controls at least one of reception of specific data from the first radio base station and transmission of the specific data to the first radio base station based on the first DCI.

2. The user terminal according to claim 1, wherein
the receiving section receives second downlink control information (DCI) transmitted from a second radio base station in a second control resource set configured within the given bandwidth, and
the control section controls at least one of reception of the specific data from the first radio base station and transmission of the specific data to the first radio base station using a resource indicated by the second DCI, based on the first DCI.

3. The user terminal according to claim 1, wherein when second downlink control information (DCI) transmitted from a second radio base station in a second control resource set configured within the given bandwidth is received by the first radio base station, the first DCI is used for scheduling the specific data in at least a part of the resource indicated by the second DCI.

4. The user terminal according to claim 1, wherein when the first DCI transmitted from the first radio base station in the first control resource set is received by a second radio base station using the given bandwidth, a resource indicated by the first DCI is used as blank resource in the second radio base station.

5. A first radio base station comprising:
a transmitting section that transmits first downlink control information (DCI) in a first control resource set configured within a given bandwidth; and
a control section that controls at least one of transmission and reception of specific data granted by the first DCI.

6. A second radio base station comprising:
a transmitting section that transmits second downlink control information (DCI) in a second control resource set configured within a given bandwidth, in addition to a first control resource set in which first downlink control information (DCI) is transmitted from a first radio base station within the given bandwidth; and
a control section that controls at least one of rate matching, puncturing, stopping transmission, and stopping reception of data in a resource indicated by the second DCI.
